# EUROPÄISCHE PATENTSCHRIFT

(11) **EP 4 473 254 B1**
(45) Veröffentlichungstag und Bekanntmachung des Hinweises auf die Patenterteilung: **10.12.2025**
(21) Anmeldenummer: 23703014.3
(22) Anmeldetag: 31.01.2023
(51) Int. Cl.: F24S 25/12, F24S 30/425, H02S 20/32

(54) **NACHFÜHREINRICHTUNG FÜR SOLARMODULE**
TRACKING DEVICE FOR SOLAR MODULES
DISPOSITIF DE SUIVI POUR MODULES SOLAIRES

(30) Priorität: 03.02.2022 DE 102022102605
(43) Veröffentlichungstag der Anmeldung: 11.12.2024
(73) Patentinhaber: Schletter International B.V., 1101 Amsterdam (NL)
(72) Erfinder: DECHANT, Gabriel, 83257 Gstadt am Chiemsee (DE); ZAPFE, Jan, 85567 Grafing (DE)
(74) Vertreter: Mötsch, Andreas
(86) Internationale Anmeldenummer: PCT/EP2023/052284
(87) Internationale Veröffentlichungsnummer: WO 2023/148153

(56) Entgegenhaltungen:
- EP-A1- 3 769 019
- EP-A1- 3 937 370
- WO-A1-2016/192766
- CN-A- 104 539 230
- DE-U1- 202017 006 862

## Beschreibung

Die vorliegende Erfindung betrifft eine Nachführeinrichtung für Solarmodule.

Derartige Nachführeinrichtungen dienen zum Nachführen der Solarmodule nach dem Sonnenstand.

Nachführvorrichtungen für Solarmodule sind aus dem Stand der Technik bekannt und beispielsweise in WO 2016/192766 A1 offenbart. Die Druckschrift WO 2016/192766 A1 offenbart eine Nachführvorrichtung für Solarmodule mit einer Reihe von entlang einer Längsachse angeordneten Pfosten. An jedem Pfosten ist ein Querträger schwenkbar gelagert, wobei die Querträger um eine gemeinsame, parallel zur Längsachse verlaufende Schwenkachse schwenkbar sind. An jedem Querträger ist ein Zahnkranz befestigt, dessen Zahnung in Eingriff mit einem am jeweiligen Pfosten gelagerten, motorisch angetriebenen Zahnrad in Eingriff ist. Das Zahnrad und der Zahnkranz müssen über separate Einrichtungen gegen eine transversale Verschiebung gesichert werden.

Zum weiteren Stand der Technik kann auf das Dokument EP 3 769 019 A1 verwiesen werden.

Es ist eine Aufgabe der vorliegenden Erfindung eine Nachführeinrichtung für Solarmodule bereitzustellen, die einen kompakt aufgebauten Antrieb mit einer verbesserten Funktionalität aufweist.

Diese Aufgabe wird mit einer Nachführeinrichtung für Solarmodule mit den Merkmalen des Patentanspruchs 1 gelöst.

Weitere Ausführungsformen sind in den beigefügten abhängigen Ansprüchen angegeben.

Die Nachführeinrichtung für Solarmodule umfasst
wenigstens eine Schwenkeinheit, wobei die wenigstens eine Schwenkeinheit wenigstens einen Antriebsbogen und wenigstens einen um eine Schwenkachse verschwenkbaren Querträger aufweist, der mit dem wenigstens einen Antriebsbogen verbunden ist, wobei der wenigstens eine Antriebsbogen in Umfangsrichtung abwechselnd angeordnete Antriebsausnehmungen und Halteausnehmungen aufweist,
wenigstens einen Pfosten, an dem der wenigstens eine Querträger um die Schwenkachse schwenkbar gelagert ist,
wenigstens ein um eine Drehachse drehbares Übertragungselement, wobei das wenigstens eine Übertragungselement wenigstens ein Antriebselement zum Eingreifen in eine der Antriebsausnehmungen und wenigstens ein Halteelement zum Eingreifen in eine der Halteausnehmungen aufweist,
wenigstens eine Antriebswelle, die mit dem wenigstens einen Übertragungselement gekoppelt ist, und
wenigstens eine Antriebseinheit, die an dem wenigstens einen Pfosten angebracht ist, wobei die wenigstens eine Antriebseinheit wenigstens einen Motor und wenigstens ein Ausgangselement aufweist, wobei das wenigstens eine Ausgangselement, die wenigstens eine Antriebswelle und das wenigstens eine Übertragungselement an einer gemeinsamen axialen Kopplungsstelle drehmomentübertragend miteinander gekoppelt sind.

Die wenigstens eine Antriebseinheit, die wenigstens eine Antriebswelle und das wenigstens eine Übertragungselement können an einer einzigen gemeinsamen axialen Kopplungsstelle miteinander drehmomentübertragend gekoppelt werden. Dadurch kann ein einfacher und kompakter Aufbau des Antriebs der Nachführeinrichtung erreicht werden. Zudem führt diese axiale Kopplungsstelle dazu, dass bei Montage- oder Wartungsarbeiten wenig Zeit zum Verbinden oder Trennen der einzelnen Komponenten benötigt wird.

Die Antriebsausnehmungen und die Halteausnehmungen können an der radial äußeren Umfangfläche oder der radial inneren Umfangsfläche des Antriebsbogens ausgebildet sein. Mit anderen Worten können die Antriebsausnehmungen und die Halteausnehmungen nach radial innen oder nach radial außen geöffnet sein.

Der wenigstens eine Pfosten kann im oder am Untergrund verankert sein. Der wenigstens eine Pfosten kann in den Untergrund gerammt und so im Untergrund verankert sein. Der wenigstens eine Pfosten kann aber auch über einen oder mehrere Befestigungsanker am Untergrund angebracht werden. Dies kann beispielsweise der Fall sein, wenn der Untergrund aus Beton besteht.

Das Übertragungselement ist derart ausgebildet, dass es abwechselnd in eine der Antriebsausnehmungen und in eine der Halteausnehmungen eingreift. Wenn sich das wenigstens eine Übertragungselement mit einer der Halteausnehmungen in Eingriff befindet, können der Querträger und der damit verbundene Antriebsbogen in ihrer eingestellten Schwenkstellung gehalten werden, ohne dass ein Drehmoment auf die Antriebseinheit oder eine mit der Schwenkeinheit verbundene Antriebswelle übertragen wird. Dadurch können die Komponenten zum Antreiben der Schwenkeinheit wie z.B. die Antriebswelle und/oder der Antriebseinheit entlastet werden. Ferner können dadurch auch windinduzierte Schwingungen in der Schwenkeinheit und den damit verbundenen Komponenten verhindert werden. Derartige Schwingungen können Schäden an der Schwenkeinheit, den daran angebrachten Solarmodulen und weiteren mit der Schwenkeinheit verbundenen Komponenten erzeugen. Diese Schwingungen können durch die steife Verbindung des Antriebsbogens mit dem wenigstens einen Übertragungselement vermieden werden, wenn das Übertragungselement mit einer der Halteausnehmungen in Eingriff steht.

Durch das Eingreifen des wenigstens einen Antriebselements in eine Antriebsausnehmung werden das Antriebselement des Übertragungselements und der Antriebsbogen derart drehmomentübertragend gekoppelt, dass es bei einer Ausführung einer Drehbewegung des Übertragungselements zu einer schrittweisen Schwenk- oder Verstellbewegung des Antriebsbogens und des daran angebrachten Querträgers um die Schwenkachse kommt. Eine kontinuierliche Drehbewegung des Übertragungselements um die Drehachse führt dementsprechend zu einer schrittweisen Schwenk- oder Verstellbewegung des Antriebsbogen und des daran angebrachten Querträgers. Die Schwenk- oder Verstellbewegung des Antriebsbogens und des daran angebrachten Querträgers wird immer dann ausgeführt, wenn sich das wenigstens eine Antriebselement mit einer der Antriebsausnehmungen in Eingriff befindet. Bei einer Drehbewegung des Übertragungselements kann das wenigstens eine Antriebselement in eine der Antriebsausnehmungen eingreifen, den Antriebsbogen und den Querträger mitnehmen und anschließend die Antriebsausnehmung wieder verlassen. Zwischen dem Eingreifen des Antriebselements in die Antriebsausnehmung und dem Verlassen der Antriebsausnehmung durch das Antriebselement drückt das wenigstens eine Antriebselement gegen einen Wandabschnitt der Antriebsausnehmung, wodurch ein Drehmoment auf den Antriebsbogen und den Querträger ausgeübt wird, das zu einer Schwenk- oder Verstellbewegung des Antriebsbogens und des Querträgers führt.

Das wenigstens eine Halteelement greift immer dann in eine Halteausnehmung ein, wenn das wenigstens eine Antriebselement nicht in Eingriff mit einer der Antriebsausnehmungen steht. Das wenigstens eine Halteelement kann formschlüssig in die wenigstens eine Halteausnehmung eingreifen. **In** diesem Zustand kann der Antriebsbogen in seiner eingestellten Position gehalten werden. Das Übertragungselement und der Antriebsbogen befinden sich somit in einer Sperrstellung. **In** der Sperrstellung wird ein Verdrehen des Antriebsbogens um seine Dreh- oder Schwenkachse verhindert. Sobald das wenigstens eine Halteelement auch nur teilweise in die Halteausnehmung eingreift, kann ein Verdrehen des Antriebsbogens und des daran angebrachten Querträgers um die Schwenkachse verhindert werden. Wird das Übertragungselement weiter angetrieben, verlässt das Halteelement die Halteausnehmung wieder und gibt den Antriebsbogen frei für einen von dem Antriebselement initiierten Verstellschritt.

Wird das wenigstens eine Übertragungselement weiter angetrieben, drehen sich das Halteelement und das Antriebselement weiter, damit das Antriebselement mit der nächsten Antriebsausnehmung in Eingriff gebracht werden kann. Beispielsweise kann das Antriebselement nach dem Austritt aus einer Antriebsausnehmung um die Drehachse der Antriebsanordnung rotiert werden, um mit der nächsten Antriebsausnehmung in Eingriff zu gelangen. Gleichzeitig dreht sich das wenigstens eine Halteelement in der Halteausnehmung weiter und verlässt die Halteausnehmung, wenn oder kurz nachdem das Antriebselement in die nächste Antriebsausnehmung eingreift. Das wenigstens eine Halteelement gibt somit den Antriebsbogen für den nächsten Verstellschritt frei.

Das wenigstens eine Ausgangselement, die wenigstens eine Antriebswelle und das wenigstens eine Übertragungselement können koaxial angeordnet sein.

Die wenigstens eine Antriebswelle kann sich durch die wenigstens eine Antriebseinheit erstrecken. Ausgehend von der axialen Kopplungsstelle kann sich die Antriebswelle durch die wenigstens eine Antriebseinheit erstrecken und mit ihrem anderen Ende mit einer weiteren Antriebswelle bzw. einem weiteren Antriebswellenstück oder einer weiteren Schwenkeinheit oder einem weiteren Übertragungselement gekoppelt werden.

Die wenigstens eine Antriebseinheit kann wenigstens ein Getriebe aufweisen. Das Getriebe kann mit dem wenigstens einem Motor gekoppelt sein. Die wenigstens eine Antriebswelle kann sich durch das wenigstens eine Getriebe erstrecken.

Zur drehmomentübertragenden Kopplung zwischen dem wenigstens einen Ausgangselement, der wenigstens einen Antriebswelle und dem wenigstens einen Übertragungselement an der axialen Kopplungsstelle kann wenigstens ein Kopplungselement vorgesehen sein. Die wenigstens eine axiale Kopplungsstelle kann derart ausgebildet sein, dass nur ein einziges Kopplungselement für die Kopplung benötigt wird. Das Kopplungselement kann sich in einer Richtung senkrecht zur Drehachse der Antriebswelle durch das Ausgangselement, die Antriebswelle und das Übertragungselement hindurch erstrecken. Das Ausgangselement, die Antriebswelle und das Übertragungselement können entsprechende Öffnungen aufweisen, durch die sich das Kopplungselement erstrecken kann. Das Kopplungselement kann ein Bolzen oder eine Schraube sein.

An der axialen Kopplungsstelle kann ein elastisches Element zum Winkelausgleich angeordnet sein. Das wenigstens eine elastische Element kann in radialer Richtung zwischen dem wenigstens einen Übertragungselement und der wenigstens einen Antriebswelle angeordnet sein. Das wenigstens eine elastische Element kann zum Ausgleich von Winkelabweichungen, Fluchtungsfehlern, Ramm- und Montagetoleranzen dienen. Das wenigstens eine elastische Element kann auch durch das wenigstens eine Kopplungselement an der Kopplungsstelle befestigt werden. Das wenigstens eine elastische Element kann in Form einer Hülse ausgebildet sein. Die Hülse kann einen nach radial außen vorstehenden Kragen aufweisen, mit dem sie sich an der Stirnseite der Antriebswelle abstützen kann. Die Hülse kann an ihrem jeweils anderen axialen Ende einen nach radial innen vorstehenden Kragen aufweisen, mit dem sie sich an der Stirnseite des wenigstens einen Übertragungselements abstützen kann.

Die Schwenkeinheiten können so ausgebildet sein, dass der Schwerpunkt der Anordnung mit der Schwenkachse bzw. mit dem zugehörigen Schwenkpunkt zusammenfällt. Es ist jedoch auch denkbar, dass der Schwerpunkt nicht mit der Schwenkachse oder dem zugehörigen Schwenkpunkt zusammenfällt.

Der wenigstens eine Motor kann eine Drehachse aufweisen, die sich zumindest im Wesentlichen parallel zur Drehachse der wenigstens einen Antriebswelle erstreckt. Es ist alternativ denkbar, dass sich die Drehachse des wenigstens einen Motors abgewinkelt zur Drehachse der wenigstens einen Antriebswelle erstreckt. Zusätzlich oder alternativ kann sich die Drehachse des Motors zumindest im Wesentlichen parallel oder abgewinkelt zur Schwenkachse erstrecken.

Das wenigstens eine Antriebselement kann einen von einem Kreisquerschnitt abweichenden und zumindest abschnittsweise gekrümmten Querschnitt aufweisen. Der Querschnitt des wenigstens einen Antriebselements kann wenigstens einen ersten Scheitelpunkt und wenigstens einen zweiten Scheitelpunkt aufweisen. Der Abstand zwischen dem ersten Scheitelpunkt und dem zweiten Scheitelpunkt kann die größte Erstreckung des Antriebselements festlegen. Der Querschnitt des wenigstens einen Antriebselements kann seine größte Erstreckung in einer Richtung quer zur radialen Richtung der Antriebseinrichtung, d.h. in tangentialer Richtung, aufweisen. Alternativ kann der Querschnitt des wenigstens einen Antriebselements wenigstens eine erste Kante und wenigsten eine zweite Kante aufweisen, deren Abstand zueinander die größte Erstreckung des Antriebselements festlegt. Sind zwei Kanten an dem Querschnitt des Antriebselements vorgesehen, kann der Querschnitt des Antriebselements zwei gekrümmte Abschnitte aufweisen, die sich zwischen den beiden Kanten erstrecken. Weist der Querschnitt des Antriebselements zwei Scheitelpunkte auf, kann der Querschnitt auch im Bereich der Scheitelpunkte gekrümmt sein. Der Querschnitt des Antriebselements kann somit mehrere Krümmungsradien aufweisen. Der Krümmungsradius im Bereich der Scheitelpunkte kann sich von dem Krümmungsradius des Abschnitts zwischen den beiden Scheitelpunkten unterscheiden.

Der Querschnitt des wenigstens einen Antriebselements kann wenigstens einen dritten Scheitelpunkt und wenigstens einen vierten Scheitelpunkt aufweisen. Der Abstand zwischen dem dritten Scheitelpunkt und dem vierten Scheitelpunkt kann kleiner als der Abstand zwischen dem ersten Scheitelpunkt oder der ersten Kante und dem zweiten Scheitelpunkt oder der zweiten Kante sein. Der dritte Scheitelpunkt und der vierte Scheitelpunkt können in radialer Richtung des wenigstens einen Übertragungselements in einer Flucht liegen. Der Abstand zwischen dem ersten Scheitelpunkt und dem zweiten Scheitelpunkt kann auf den Querschnitt der Antriebsausnehmungen abgestimmt sein. Durch den in radialer Richtung reduzierten Querschnitt des Antriebselements können insbesondere die Antriebsausnehmungen mit einem verkleinerten Querschnitt an der Eintrittsöffnung ausgebildet werden, da das wenigstens eine Antriebselement aufgrund seiner Form nur wenig Raum benötigt, um die entsprechende Antriebsausnehmung eintauchen zu können.

Durch den Abstand zwischen dem dritten Scheitelpunkt und dem vierten Scheitelpunkt, der kleiner als der Abstand zwischen dem ersten Scheitelpunkt und dem zweiten Scheitelpunkt ist, kann erreicht werden, dass tangentiale Verschiebungen zwischen dem Antriebsbogen und dem Übertragungselement, die aufgrund von Toleranzen entstehen können, kompensiert werden können, sodass das Eingreifen des wenigstens einen Antriebselements in die zugeordnete Antriebsausnehmung sichergestellt werden kann. Unter anderem über den Abstand zwischen dem dritten oder dem vierten Scheitelpunkt, d.h. über den in radialer Richtung reduzierten Querschnitt des Antriebselements kann die Größe eines radialen Freiraums zwischen dem wenigstens einen Halteelement und dem wenigstens einen Antriebselement festgelegt werden, der das wechselweise Eingreifen des Antriebselements und des Halteelements in die zugeordneten Antriebsausnehmungen und Halteausnehmungen unterstützen kann.

Die Antriebsausnehmungen an dem Antriebsbogen können einen sich in radialer Richtung verändernden Querschnitt aufweisen. Die Antriebsausnehmungen können gegenüberliegende Wandabschnitte aufweisen, deren Abstand zueinander sich in radialer Richtung verändert. Die beiden gegenüberliegenden Wandabschnitte können die Eintrittsöffnung der wenigstens einen Antriebsausnehmung für das wenigstens eine Antriebselement zwischen sich festlegen.

Die wenigstens eine Antriebsausnehmung kann sich in radialer Richtung nach außen und innen aufweiten. Durch die Aufweitung der Antriebsausnehmung in radialer Richtung nach außen oder nach innen kann die Eintrittsöffnung der Antriebsausnehmung für das Eintauchen bzw. Eingreifen des Antriebselements vergrößert werden.

Die Antriebsausnehmungen an dem Antriebsbogen können in radialer Richtung in einem mittleren Bereich einen verringerten Querschnitt aufweisen. Die Antriebsausnehmungen können im Bereich der Eintrittsöffnung und in einem radialen Endbereich verglichen mit dem mittleren Bereich einen größeren Querschnitt aufweisen. Die gegenüberliegenden Wandabschnitte der Antriebsausnehmungen können in dem in radialer Richtung mittleren Bereich einen verringerten Abstand zueinander aufweisen. Der Abstand der beiden Wandabschnitte kann in dem mittleren Bereich geringer sein als im Bereich der Eintrittsöffnung und in dem radialen Endbereich. Die Antriebsausnehmungen können eine hinterschnittene Kontur aufweisen.

Die gegenüberliegenden Wandabschnitte der Antriebsausnehmungen können gekrümmt sein. Jeder der gekrümmten Wandabschnitte kann einen Scheitelpunkt aufweisen. An den Scheitelpunkten der Krümmung weisen die gegenüberliegenden Wandabschnitte den geringsten Abstand zueinander auf. Ausgehend von der Eintrittsöffnung kann sich der Abstand der gegenüberliegenden Wandabschnitte bis zu den Scheitelpunkten verringern. Ausgehend von den Scheitelpunkten kann sich der Abstand der Wandabschnitte zueinander in Richtung des radialen Endes der Antriebsausnehmungen vergrößern. Die gegenüberliegenden Wandabschnitte können eine konvexe Krümmung aufweisen.

Durch diesen Querschnitt der Antriebsausnehmungen kann das wenigstens eine Antriebselement in tangentialer Richtung größer bzw. breiter ausgebildet sein, d. h. der Abstand zwischen dem ersten Scheitelpunkt und dem zweiten Scheitelpunkt des Antriebselements kann dementsprechend größer sein. Das wenigstens eine Antriebselement kann dementsprechend größere Kräfte aufnehmen und insgesamt robuster sein.

Die derart ausgebildeten Antriebsausnehmungen tragen ferner dazu bei, dass Montagetoleranzen und Fertigungstoleranzen ausgeglichen werden können. Mit den Antriebsausnehmungen bzw. durch deren beschriebene Form kann eine Relativbewegung zwischen dem Antriebsbogen und dem Übertragungselement durch das wenigstens eine Antriebselement länger blockiert werden, sodass eine vorzeitige Freigabe des wenigstens einen Antriebsbogens aufgrund einer Bewegung des Antriebsbogens unter Last verhindert werden kann. Dadurch können unerwünschte Bewegungen des Antriebsbogens zuverlässig unterbunden werden.

Das wenigstens eine Übertragungselement kann zwei Kopplungsabschnitte aufweisen. Die Kopplungsabschnitte können rohrförmig ausgebildet sein. Die Kopplungsabschnitte sind zur Kopplung mit jeweils einer Antriebswelle oder einem Antriebswellenstück ausgebildet.

Die Drehachse des wenigstens einen Übertragungselements kann durch oder entlang des wenigstens einen Halteelements verlaufen, d.h. die Drehachse kann einen Abstand zu dem Halteelement aufweisen. Das wenigstens eine Halteelement kann eine Außenkontur mit einer Krümmung aufweisen. Die Krümmung der Außenkontur des Halteelements kann auf die Krümmung der wenigstens einen Halteausnehmung abgestimmt sein, sodass das wenigstens eine Halteelement in die wenigstens eine Halteausnehmung eindringen und in der Halteausnehmung rotieren kann. Sobald das wenigstens eine Halteelement in die wenigstens eine Halteausnehmung eindringt, kann ein Verdrehen des Antriebsbogens um die Dreh- oder Schwenkachse verhindert werden. Der Krümmungsradius der gekrümmten Außenkontur kann auf den Krümmungsradius der Wandung der wenigstens einen Halteausnehmung abgestimmt sein.

Das wenigstens eine Halteelement des wenigstens einen Übertragungselements kann eine Außenkontur in Form eines Kreisbogens und eine gekrümmte Fläche aufweisen, die dem wenigstens einen Antriebselement zugewandt ist. Die gekrümmte Fläche kann konkav gekrümmt sein.

Der Pfosten kann wenigstens einen Befestigungsabschnitt und wenigstens einen Verankerungsabschnitt aufweisen. An dem Befestigungsabschnitt kann die wenigstens eine Schwenkeinheit und die wenigstens eine Antriebseinheit seitlich angeordnet sein.

Der Befestigungsabschnitt und der Verankerungsabschnitt des Pfostens können als separate Pfostenteile ausgeführt sein, die miteinander verbindbar sind. Der Befestigungsabschnitt und der Verankerungsabschnitt können derart ausgebildet sein, dass durch die Verbindung der beiden Abschnitte des Pfostens Geländeunebenheiten und Rammtoleranzen sowie daraus resultierende Höhenunterschiede und Winkelabweichungen ausgeglichen werden können.

Es kann wenigstens ein Halterungselement zum Anbringen der Antriebseinheit an dem wenigstens einem Pfosten vorgesehen sein. Das Halterungselement kann seitlich an dem Pfosten angebracht sein. Das wenigstens eine Halterungselement kann eine Öffnung aufweisen, durch die die axiale Kopplungsstelle zugänglich ist.

Das wenigstens eine Übertragungselement kann wenigstens einen Anlageabschnitt aufweisen. Das wenigstens eine Antriebselement und das wenigstens eine Halteelement können über wenigstens einen Anlageabschnitt miteinander verbunden sein. Der Anlageabschnitt kann sich in radialer Richtung erstrecken. Der Anlageabschnitt kann beispielsweise scheiben- oder nockenförmig ausgebildet sein. Der wenigstens eine Anlageabschnitt kann ferner mit wenigstens einem Kopplungsabschnitt verbunden sein, über den das wenigstens eine Übertragungselement mit wenigstens einer Antriebswelle koppelbar ist. Das wenigstens eine Übertragungselement kann zwei Anlageabschnitte aufweisen, zwischen denen sich das wenigstens eine Antriebselement und das wenigstens eine Halteelement erstrecken. Die beiden Anlageabschnitte können eine Führung für den Antriebsbogen bilden. Der Antriebsbogen kann zwischen den beiden Anlageabschnitten verlaufen.

Die Nachführeinrichtung kann wenigstens eine Abhängung zum Abstützen der wenigstens einen Antriebswelle aufweisen. Die wenigstens eine Abhängung kann wenigstens ein Verbindungselement und wenigstens ein Stützelement aufweisen. Das wenigstens eine Verbindungselement kann eine Stange, ein Kabel, ein Seil, eine Kette oder ein Draht sein. Das wenigstens eine Verbindungselement kann an wenigstens einem Trägerelement angebracht sein. Bei dem Trägerelement kann es sich um einen Querträger, einen Zwischenträger, der zum Abstützen der Solarmodule dient, oder um eine Querstrebe handeln, die sich zwischen den Tragschienen erstreckt. Das wenigstens eine Verbindungselement kann sich zu dem wenigstens einen Stützelement erstrecken, das die wenigstens eine Antriebswelle zu deren Abstützung kontaktiert. Das wenigstens eine Stützelement kann sich unterhalb des wenigstens einen Trägerelements befinden. Das wenigstens eine Stützelement kann somit unterhalb des wenigstens einen Trägerelements hängen.

Die Nachführeinrichtung kann wenigstens ein Adapterelement zum Anbringen von bifazialen Solarmodulen aufweisen. Das wenigstens eine Adapterelement kann einen Auflageabschnitt zur Auflage auf einer Tragschiene und einen Stützabschnitt aufweisen, der zum Anbringen der bifazialen Solarmodule ausgebildet ist. An dem Auflageabschnitt kann wenigstens ein Aufnahmekanal für ein Befestigungselement ausgebildet sein. Das wenigstens eine Adapterelement kann sich zumindest abschnittsweise parallel zu einer der Tragschienen erstrecken. Das wenigstens eine Adapterelement kann wenigstens einen Positioniervorsprung aufweisen, der zur Positionierung des Adapterelements an der Tragschiene dient. Das wenigstens eine Adapterelement kann einen Abstandshalter bilden, um bei den bifazialen Solarmodulen die Rückseitenverschattung zu minimieren.

Im Folgenden wird eine Ausführungsform der Erfindung beispielhaft mit Bezug auf die beigefügten Figuren beschrieben. Es stellen dar:
- Figur 1: eine perspektivische Ansicht einer Nachführeinrichtung;
- Figur 2: einen vergrößerten Ausschnitt aus Figur 1;
- Figuren 3 bis 6: verschiedene Ansichten einer Schwenkeinheit für die Nachführeinrichtung gemäß Figur 1;
- Figur 7: eine Ansicht der Nachführeinrichtung gemäß Figur 1;
- Figur 8: eine vergrößerte Ansicht des Ausschnitts VIII in Figur 7;
- Figur 9: eine Ansicht eines vergrößerten Ausschnitts aus Figur 8;
- Figur 10: eine Schnittansicht des vergrößerten Ausschnitts gemäß Figur 9;
- Figur 11: eine Ansicht eines vergrößerten Ausschnitts aus Figur 8;
- Figuren 12 und 13: verschiedene Ansichten eines Übertragungselements;
- Figur 14: eine Schnittansicht entlang der Schnittlinie XIV-XIV in Figur 12;
- Figuren 15a und 15b: Ansichten eines Antriebsbogens;
- Figuren 16a bis 18a: Ansichten des Antriebsbogens und des Übertragungselements in verschiedenen Positionen;
- Figur 19: eine Ansicht der Nachführeinrichtung mit einer Abhängung für die Antriebswelle;
- Figuren 21 bis 23: eine weitere Ansicht der Nachführeinrichtung mit der Abhängung; und
- Figuren 24 bis 26: Ansichten einer Nachführeinrichtung mit Adapterelementen für bifaziale Solarmodule.

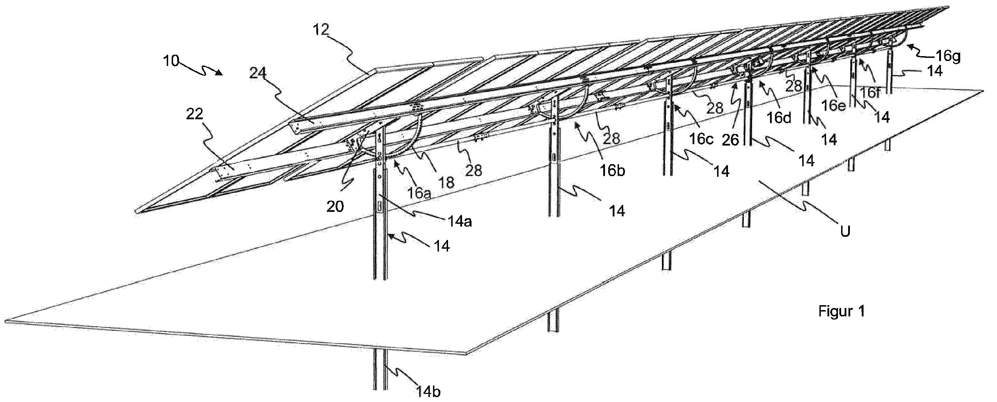

Figur 1 zeigt eine perspektivische Ansicht einer Nachführeinrichtung 10 für Solarmodule 12. Die Nachführeinrichtung 10 dient zum Nachführen der Solarmodule 12 nach dem Sonnenstand. Die Nachführeinrichtung 10 weist mehrere Pfosten 14 und mehrere Schwenkeinheiten 16a bis 16g auf. Die Nachführeinrichtung 10 bzw. die Schwenkeinheiten 16a bis 16g sind über die Pfosten 14 im Untergrund U verankert. Die Pfosten 14 sind zweiteilig ausgeführt. Die Pfosten 14 haben einen Befestigungsabschnitt 14a und einen Verankerungsabschnitt 14b. Der Verankerungsabschnitt 14b wird im Untergrund U verankert. Im Anschluss daran kann der Befestigungsabschnitt 14a mit einer der Schwenkeinheiten16a bis 16g an dem Verankerungsabschnitt 14b angebracht werden.

Jede der Schwenkeinheiten 16 umfasst einen Antriebsbogen 18 und einen Querträger 20. Aus Gründen der Übersichtlichkeit sind nur die Pfostenabschnitte 14a, 14b, der Antriebsbogen 18 und der Querträger 20 der in Figur 1 vorderen Schwenkeinheit 16a mit einem Bezugszeichen versehen. Die Schwenkeinheiten 16a bis 16g sind über Tragschienen 22 und 24 miteinander verbunden. Die Tragschienen 22 und 24 sind an den Querträgern 20 angebracht. Die Tragschienen 22 und 24 tragen die Solarmodule 12, die an den Tragschienen 22 und 24 befestigt sind. Die Nachführeinrichtung 10 ist insbesondere für die Anordnung von Solarmodulen 12 in Portrait-Orientierung ausgebildet. **In** der Portrait-Orientierung sind die Solarmodule 12 vertikal bzw. im Hochformat angeordnet.

Die Nachführeinrichtung 10 weist eine Antriebseinheit 26 auf. Die Antriebseinheit 26 ist an dem Pfosten 14 der Schwenkeinheit 16d angeordnet und dient zum Antreiben der Schwenkeinheiten 16a bis 16g über die Antriebswellen bzw. die Antriebswellenstücke 28. Durch die Antriebswellen 28 werden die Schwenkeinheiten 16a bis 16g drehmomentübertragend miteinander gekoppelt. Das von der an der Schwenkeinheit 16d angeordneten Antriebseinheit 26 erzeugte Drehmoment kann über die Antriebswellen 28 zu den übrigen Schwenkeinheiten 16a bis 16c und 16e bis 16g übertragen werden.

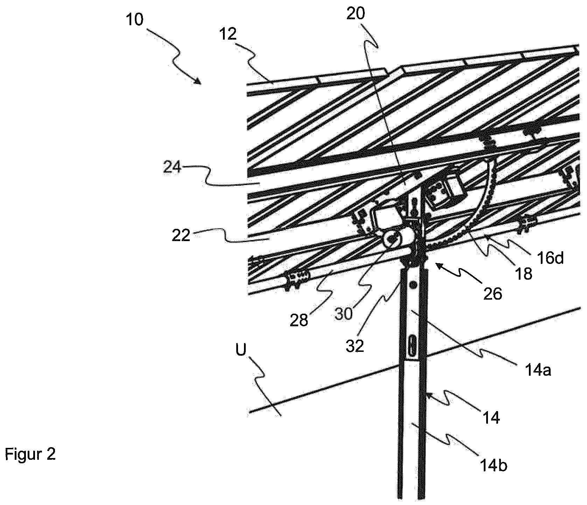

Figur 2 zeigt einen vergrößerten Ausschnitt aus Figur 1, in dem insbesondere die Schwenkeinheit 16d und die Antriebseinheit 26 gezeigt sind. Die Antriebseinheit 26 ist an einem Pfosten 14 angeordnet. Der Pfosten 14 ist zweiteilig ausgeführt. Der Pfosten 14 setzt sich aus dem Befestigungsabschnitt 14a und einem Verankerungsabschnitt 14b zusammen, der im Untergrund U verankert ist. An dem Befestigungsabschnitt 14a sind die Antriebseinheit 26 und die Schwenkeinheit 16d angebracht, die den Antriebsbogen 18 und den Querträger 20 umfasst. Die Antriebseinheit 26 umfasst einen Motor 30 und ein Getriebe 32.

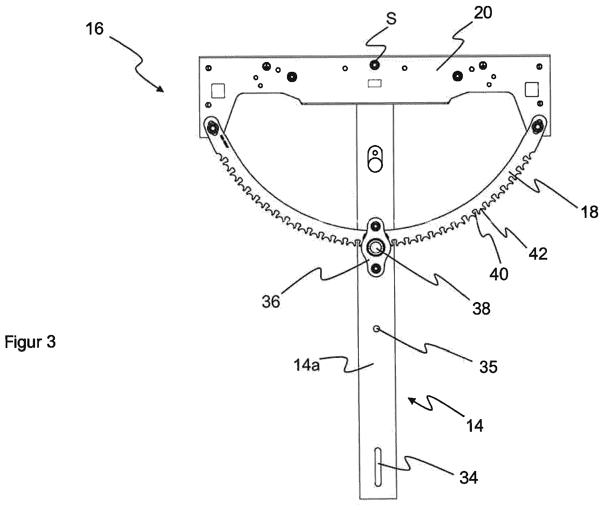

Figur 3 zeigt eine Ansicht einer Schwenkeinheit 16. Die Schwenkeinheit 16 ist um die Schwenkachse S verschwenkbar an dem Pfosten 14 angebracht. Die Schwenkeinheit 16 weist den Antriebsbogen 18 und den Querträger 20 auf. Der Antriebsbogen 18 ist an dem Querträger 20 befestigt. Der Querträger 20 ist an dem Pfosten 14 verschwenkbar angebracht. **In** Figur 3 ist der Befestigungsabschnitt 14a des Pfostens 14 gezeigt. Der Befestigungsabschnitt 14a weist ein Langloch 34 und eine Öffnung 35 auf, die zur Verbindung mit dem in den Figuren 1 und 2 gezeigten Verankerungsabschnitt 14b dienen. Die Öffnung 35 ist oberhalb des Langlochs 34 vorgesehen. An dem Befestigungsabschnitt 14a sind die Schwenkeinheit 16 und ein Lagerelement 36 angebracht. Das Lagerelement 36 dient zur Lagerung eines Übertragungselements 38, von dem in Figur 3 nur die Stirnseite erkennbar ist. Das Übertragungselement 38 dient zum Übertragen eines Drehmoments auf den Antriebsbogen 18, um die Schwenkeinheit 16 verschwenken zu können. Darüber hinaus dient das Übertragungselement 38 auch zum Verriegeln des Antriebsbogens 18 in einer eingestellten Position.

Der Antriebsbogen 18 ist an dem Querträger 20 befestigt. Der Antriebsbogen 18 weist bezogen auf die Schwenkachse S an seiner radial äußeren Seite mehrere Ausnehmungen 40 und 42 auf. Bei den Ausnehmungen 40 handelt es sich um Antriebsausnehmungen 40, mit denen der Antriebsbogen 18 bewegt und damit die Schwenkeinheit 16 verschwenkt werden kann. Die Halteausnehmungen 42 dienen zum Halten oder Verriegeln des Antriebsbogens 18 und damit der Schwenkeinheit 16 in der eingestellten Position.

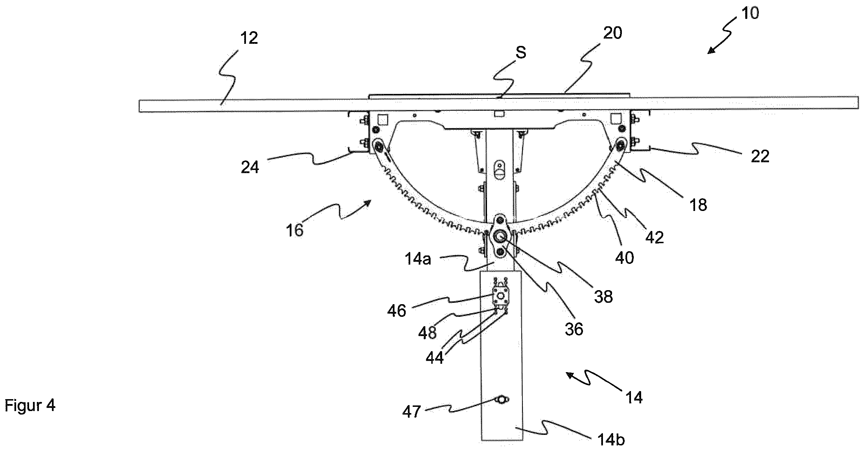

Figur 4 zeigt eine weitere Ansicht der Nachführeinrichtung 10. An dem Querträger 20 sind die Tragschienen 22 und 24 über Schraubverbindungen befestigt. Die Tragschienen 22 und 24 tragen die Solarmodule 12. Der Querträger 20 steht in vertikaler Richtung über die Oberkante des Solarmoduls 12 vor. Dies bedeutet, dass der Querträger 20 und damit die Schwenkeinheit 16 in Richtung der Schwenkachse S zwischen zwei benachbarten Solarmodulen 12 angeordnet sind. Die Schwenkeinheiten 16 sind so ausgebildet, dass der Schwerpunkt der Anordnung mit der Schwenkachse S bzw. mit dem zugehörigen Schwenkpunkt zusammenfällt.

Der Befestigungsabschnitt 14a und der Verankerungsabschnitt 14b des Pfostens 14 sind miteinander verbunden. Der Verankerungsabschnitt 14b weist zwei Lochreihen 44, eine Halteklammer 46, eine Öffnung 47 und ein Langloch 48 auf. Das Langloch 48 ist zwischen den beiden Lochreihen 44 ausgebildet. Die Lochreihen 44 wirken mit einer Halteklammer 46 zum Fixieren der eingestellten Höhe des Befestigungsabschnitts 14a zusammen. Die Öffnung 47 ist unterhalb der Lochreihen 44 und dem Langloch 48 an dem Verankerungsabschnitt 14b vorgesehen. Die Öffnung 47 ist in der gezeigten Ausführungsform raupenförmig ausgebildet.

Das Langloch 34 und die Öffnung 35 an dem Befestigungsabschnitt 14a (siehe Figur 3) wirken mit dem Langloch 48 und der Öffnung 47 an dem Verankerungsabschnitt 14b zum Einstellen der Höhe und des Winkels des Befestigungsabschnitts 14a zusammen. Die eingestellte Höhe des Befestigungsabschnitts 14b kann über die Halteklammer 46 festgelegt bzw. fixiert werden, die in die beiden Lochreihen 44 an dem Verankerungsabschnitt 14b eingreift. Der Winkel zwischen den Befestigungsabschnitten 14a und 14b kann über die raupenförmige Öffnung 47 eingestellt werden.

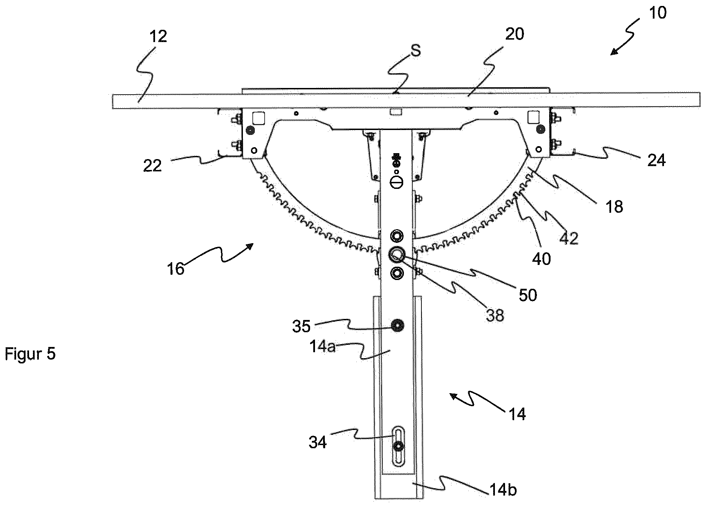

Figur 5 zeigt eine Ansicht der Nachführvorrichtung 10, die verglichen mit den Figuren 3 und 4 die andere axiale Seite des Pfostens 14 und der Schwenkeinrichtung 16 zeigt. In Figur 5 ist der Befestigungsabschnitt 14a gezeigt. Der Befestigungsabschnitt 14a weist das voranstehend bereits beschriebene Langloch 34 und die Öffnung 35 auf. Mit dem Langloch 34 und der Öffnung 35 ist der Befestigungsabschnitt 14a über Befestigungselemente mit dem Verankerungsabschnitt 14b verbunden. Der Befestigungsabschnitt 14a weist eine Öffnung 50 auf, durch die sich das Übertragungselement 38 erstreckt.

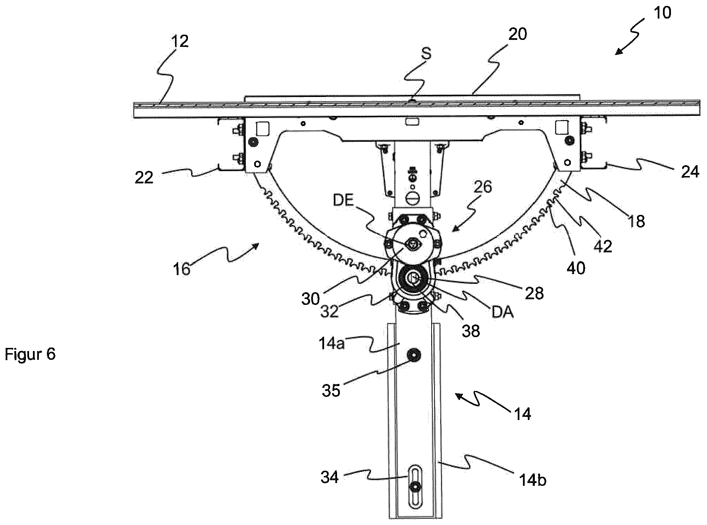

Figur 6 zeigt eine weitere Ansicht der Nachführeinrichtung 10. Figur 6 zeigt dieselbe Seite der Nachführeinrichtung 10 wie Figur 5. An dem Befestigungsabschnitt 14a ist die Antriebseinheit 26 angeordnet, die den Motor 30 und das Getriebe 32 umfasst. Die Antriebswelle 28 ist mit der Antriebseinheit 26 koppelt. Die Antriebswelle 28 erstreckt sich durch die Antriebseinheit 26. Insbesondere erstreckt sich die Antriebswelle 28 durch das Getriebe 32 der Antriebseinheit 26. Die Drehachse DA eines Ausgangselements (nicht gezeigt), die mit der Drehachse der Antriebswelle 28 zusammenfällt, erstreckt sich im Wesentlichen parallel zur Schwenkachse S. Auch die Drehachse DE des Motors 30 erstreckt sich im Wesentlichen parallel zur Schwenkachse S. Dementsprechend erstrecken sich auch die Drehachse DA des Ausgangselements und der Antriebswelle 28 im Wesentlichen parallel zur Drehachse DE des Motors 30.

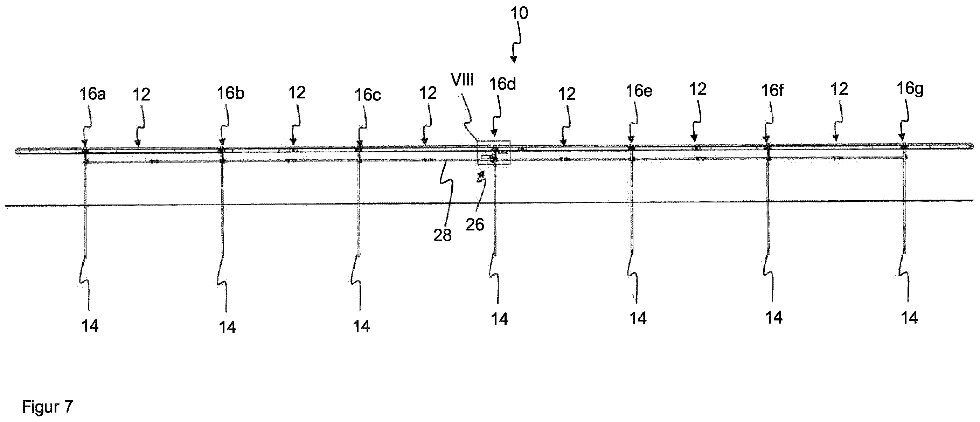

Figur 7 zeigt eine Ansicht der Nachführvorrichtung 10. Die Schwenkeinheiten 16a bis 16g sind in axialer Richtung in den Zwischenräumen zwischen den Solarmodulen 12 angeordnet. Durch diese Anordnung der Schwenkeinheiten 16a bis 16g mit den Pfosten 14 zwischen den Solarmodulen 12 fällt der Schwerpunkt mit der Schwenkachse bzw. mit dem zugehörigen Schwenkpunkt zusammen. Die Schwenkeinheiten 16a bis 16g sind über Antriebswellen 28 miteinander verbunden, um die einzelnen Schwenkeinheiten 16a bis 16g antreiben und die Solarmodule 12 um die Schwenkachse S (siehe Figuren 3 bis 6) verschwenken zu können. An der in Figur 7 mittleren Schwenkeinheit 16d bzw. an dem Pfosten 14, an dem die Schwenkeinheit 16d angebracht ist, ist gemäß dieser Ausführungsform die Antriebseinheit 26 angeordnet.

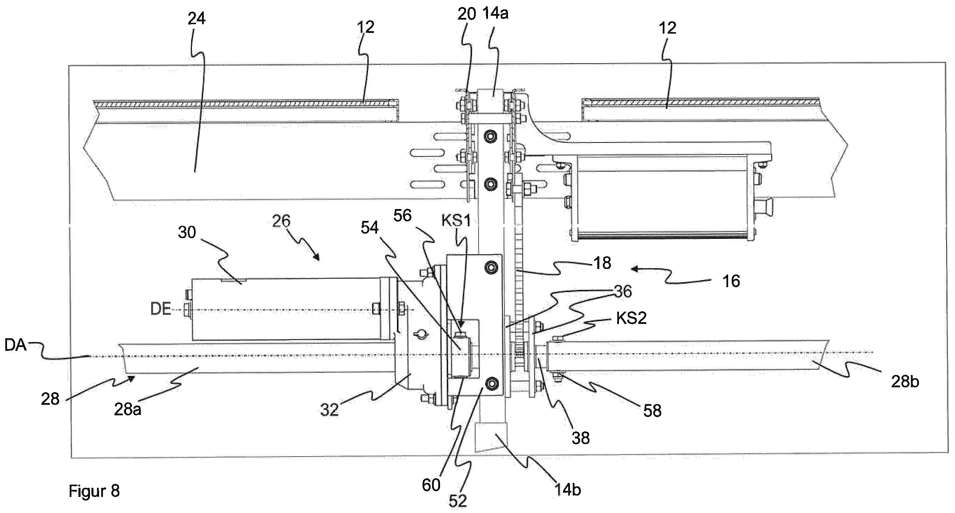

Figur 8 zeigt eine vergrößerte Ansicht des Ausschnitts VIII in Figur 7. Die Antriebswelle 28 setzt sich aus mehreren Antriebswellenstücken 28a und 28b zusammen. Die Antriebswellenstücke 28a und 28b werden im Bereich der Schwenkeinheit 16 über das Übertragungselement 38 drehmomentübertragend miteinander gekoppelt.

Das Übertragungselement 38 ist dazu ausgebildet, den Antriebsbogen 18 zum Verschwenken der Schwenkeinheit 16 anzutreiben und den Antriebsbogen 18 in einer einmal eingestellten Position zu verriegeln, um die Schwenkeinheit 16 in dieser Position zu halten. Das Übertragungselement 38 steht dazu in Eingriff mit dem Antriebsbogen 18. Die Hauptfunktion des Übertragungselements 38 besteht darin, den Antriebsbogen 18 anzutreiben und zu verriegeln. Neben dieser Hauptfunktion sorgt das Übertragungselement 38 für eine drehmomentübertragende Kopplung der Antriebswellenstücke 28a und 28b. Das Übertragungselement 28 ist an den beiden Lagerelementen 36 drehbar gelagert. Die beiden Lagerelemente 36 sind an dem Befestigungsabschnitt 14a befestigt.

### Seitlich an dem Befestigungsabschnitt 14a ist ein Halterungselement

52 für die Antriebseinheit 26 angebracht. An dem Halterungselement 52 sind der Motor 30 und das Getriebe 32 befestigt. In axialer Richtung ist das Getriebe 32 zwischen dem Halterungselement 52 und dem Motor 30 angeordnet. Der Motor 30 befindet sich in vertikaler Richtung oberhalb des Antriebswellenstücks 28a. Die Drehachse DE des Motors 30 erstreckt sich zumindest im Wesentlichen parallel zur Drehachse DA der Antriebswelle 28, eines Ausgangselements 54 der Antriebseinheit 26 und des Übertragungselements 38. Mit anderen Worten fallen in der Drehachse DA die Drehachsen der Antriebswelle 28, des Ausgangselements 54 und des Übertragungselements 38 zusammen.

Die Antriebswelle 28 bzw. das Antriebswellenstück 28a, das Ausgangselement 54 und das Übertragungselement 38 sind an einer einzigen gemeinsamen axialen Kopplungsstelle KS1 miteinander verbunden. Gemäß dieser Ausführungsform erfolgt die Verbindung der Antriebswelle 28, des Ausgangselements 54 und des Übertragungselements 38 an der Kopplungsstelle KS1 über ein einziges Kopplungselement 56, d.h. über einen einzigen Bolzen 56. Das Haltelement 52 weist eine Öffnung 60 auf, über die die Kopplungsstelle KS1 zugänglich ist.

Die Antriebseinheit 26 ist an einer axialen Seite des Pfostens 14 angeordnet und über das Halterungselement 52 angebracht. Auf der anderen axialen Seite des Pfostens 14 sind der Antriebsbogen 18 und die Lagerelemente 36 angeordnet. Der Pfosten 14 ist somit in axialer Richtung zwischen der Antriebseinheit 26 und dem Antriebsbogen 18 angeordnet.

Das Übertragungselement 38 ist an der Kopplungsstelle KS2 mit dem Antriebswellenstück 28b gekoppelt. Auch die Kopplung zwischen dem Antriebswellenstück 28b und dem Übertragungselement 38 erfolgt über ein einziges Kopplungselement 58, d.h. über einen einzigen Bolzen 58.

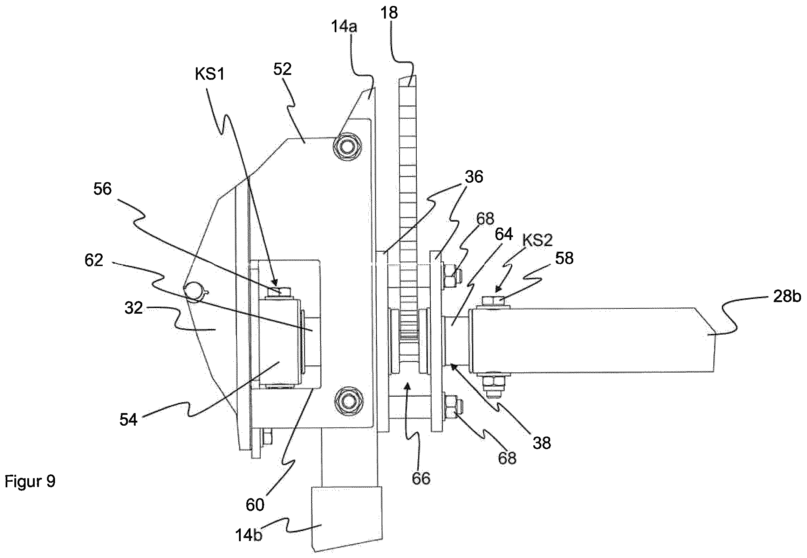

Figur 9 zeigt einen vergrößerten Ausschnitt aus Figur 8. Das Übertragungselement 38 weist zwei Kopplungsabschnitte 62 und 64 auf. Zwischen den Kopplungsabschnitten 62 und 64 ist der Eingriffsabschnitt 66 angeordnet, mit dem das Übertragungselement 38 mit dem Antriebsbogen 18 in Eingriff steht. Das Übertragungselement 38 ist an den beiden Lagerelementen 36 drehbar gelagert. Die Lagerelemente 36 sind über Bolzen 68 an dem Befestigungsabschnitt 14a angebracht. Der Antriebsbogen 18 verläuft in axialer Richtung zwischen den beiden Lagerelementen 36. Der Kopplungsabschnitt 64 des Übertragungselements 38 und das Antriebswellenstück 28b sind an der axialen Kopplungsstelle KS2 über den Bolzen 58 drehmomentübertragend gekoppelt.

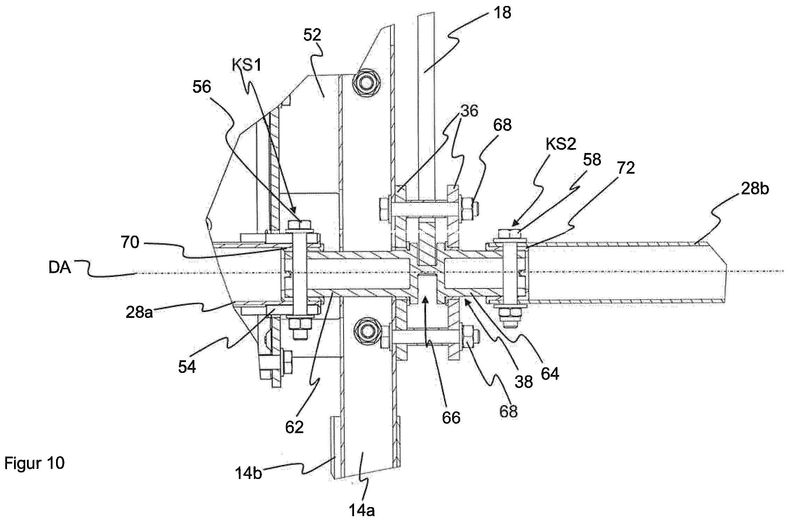

Figur 10 zeigt den Ausschnitt gemäß Figur 9 im Schnitt. Das Übertragungselement 38 hat die beiden rohrförmigen Kopplungsabschnitte 62 und 64. In axialer Richtung zwischen den rohrförmigen Kopplungsabschnitten 62 und 64 ist der Eingriffsabschnitt 66 angeordnet, mit dem das Übertragungselement 38 mit dem Antriebsbogen 18 in Eingriff steht. Der rohrförmige Kopplungsabschnitt 62 des Übertragungselements 38 erstreckt sich durch den Pfosten 14 in axialer Richtung zur Kopplungsstelle KS1. Das Übertragungselement 38 ist an den beiden Lagerelementen 36 drehbar gelagert. Die Lagerelemente 36 sind über Bolzen 68 an dem Befestigungsabschnitt 14a angebracht. Der Antriebsbogen 18 verläuft in axialer Richtung zwischen den beiden Lagerelementen 36.

An der Kopplungsstelle KS1 sind das Antriebswellenstück 28a, das Übertragungselement 38 und das Ausgangselement 54 drehmomentübertragend über den Bolzen 56 miteinander gekoppelt. Der Bolzen 56 erstreckt sich senkrecht zur Drehachse DA durch das Antriebswellenstück 28, das Ausgangselement 54 und den rohrförmigen Kopplungsabschnitt 62 des Übertragungselements 38. Das Antriebswellenstück 28a, das Ausgangselement 54 und der rohrförmige Kopplungsabschnitt 62 des Übertragungselements 38 sind zumindest abschnittsweise ineinander angeordnet, sodass sich deren Endabschnitte in axialer Richtung überlappen.

In radialer Richtung zwischen dem Kopplungsabschnitt 62 und dem Antriebswellenstück 28a ist ein elastisches Element 70 in Form einer Hülse angeordnet. Die Hülse 70 umschließt den Endabschnitt des Kopplungsabschnitts 62 und stützt sich über einen nach radial außen vorstehenden Kragen an der Stirnseite des Antriebswellenstücks 28a ab. Zudem weist die Hülse 70 an ihrem jeweils anderen axialen Ende einen nach radial innen vorstehenden Kragen auf, mit dem sich die Hülse 70 an der Stirnseite des Kopplungsabschnitts 62 abstützen kann. Die Hülse 70 dient zum Ausgleich von Winkelversätzen zwischen dem Antriebswellenstück 28a und dem Übertragungselement 38.

An der Kopplungsstelle KS2 sind der rohrförmige Kopplungsabschnitt 64 und das Antriebswellenstück 28b über den Bolzen 58 drehmomentübertragend miteinander gekoppelt. Der Bolzen 58 erstreckt sich senkrecht zur Drehachse DA durch den Kopplungsabschnitt 64 und das Antriebswellenstück 28b. In radialer Richtung zwischen dem rohrförmigen Kopplungsabschnitt 62 und dem Antriebswellenstück 28b ist ein elastisches Element 72 in Form einer Hülse angeordnet. Die Hülse 72 ist identisch zu der voranstehend beschriebenen Hülse 70 ausgebildet. Dementsprechend umgibt die Hülse 72 den Endabschnitt des Kopplungsabschnitts 64 und stützt sich über einen nach radial außen vorstehenden Kragen an der Stirnseite des Antriebswellenstücks 28b ab. Zudem weist die Hülse 72 an ihrem jeweils anderen axialen Ende einen nach radial innen vorstehenden Kragen auf, mit dem sich die Hülse 72 an der Stirnseite des Kopplungsabschnitts 64 abstützen kann. Die Hülse 72 dient zum Ausgleich von Winkelversätzen zwischen dem Übertragungselement 38 und dem Antriebswellenstück 28b.

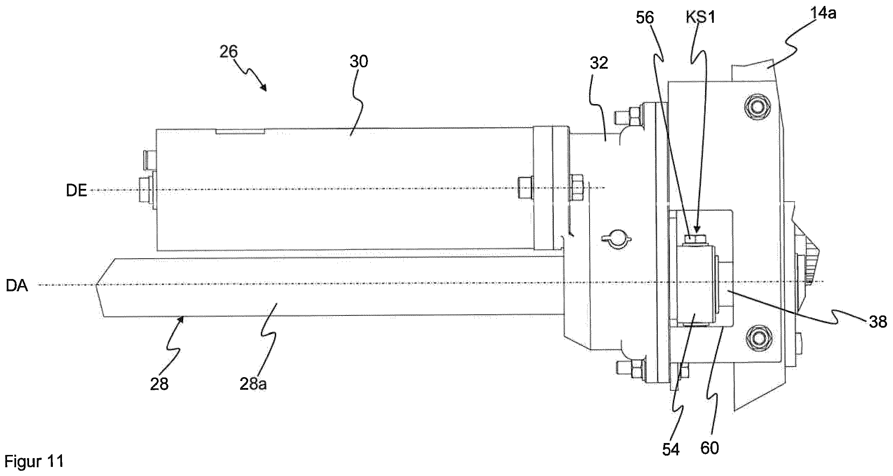

Figur 11 zeigt einen weiteren vergrößerten Ausschnitt aus Figur 8. In Figur 11 ist die Antriebseinheit 26 gezeigt, die den Motor 30 und das Getriebe 32 umfasst. Die Antriebseinheit 26 ist mit der Antriebswelle 28 bzw. mit dem Antriebswellenstück 28a an der Kopplungsstelle KS1 über das Ausgangselement 54 und den Bolzen 56 gekoppelt. Die Drehachse DE des Motors 30 und die Drehachse DA, in der die Drehachse des Antriebswellenstücks 28a, die Drehachse des Ausgangselements 54 und die Drehachse des Übertragungselements 38 zusammenfallen, erstrecken sich zumindest im Wesentlichen parallel zueinander.

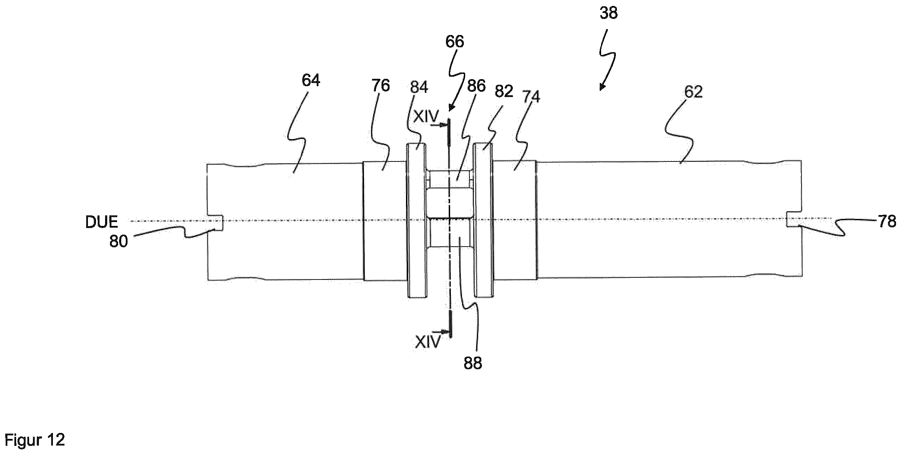

Figur 12 zeigt eine Ansicht des Übertragungselements 38. Das Übertragungselement 38 umfasst die beiden Kopplungsabschnitte 62 und 64 sowie den in axialer Richtung zwischen den Kopplungsabschnitten 62 und 64 angeordneten Eingriffsabschnitt 66. Die Kopplungsabschnitte 62 und 64 weisen jeweils einen Abschnitt 74 und 76 mit einem vergrößerten Durchmesser auf. Die Abschnitte 74 und 76 bilden jeweils einen Lagerabschnitt 74, 76, mit denen das Übertragungselement 38 an den Lagerelementen 36 (siehe beispielsweise Figur 8) gelagert werden kann. Jeder Kopplungsabschnitt 62 und 64 hat eine Nut 78 und 80, die sich von der Stirnfläche des jeweiligen Kopplungsabschnitts 62, 64 in axialer Richtung in den jeweiligen Kopplungsabschnitt 62, 64 hinein erstreckt. Die Nuten 78 und 80 dienen als Verdrehsicherung für die Hülsen 70 und 72, die auf die Enden der Kopplungsabschnitte 62 und 64 aufgesteckt werden, bevor der jeweilige Kopplungsabschnitte 62, 64 in das Ende des entsprechenden Antriebswellenstücks 28a oder 28b (siehe Figur 10) eingesteckt wird. Die Hülsen 70 und 72 können an ihren nach radial innen vorstehenden Kragen Vorsprünge (siehe Figur 10) aufweisen, die in die Nuten 78 und 80 eingreifen, um ein Verdrehen der Hülsen 70 und 72 zu verhindern.

Der Eingriffsabschnitt 66 wird von zwei Anlageabschnitten 82 und 84 begrenzt. Die Anlageabschnitte 82 um 84 können sich in axialer Richtung an den Lagerelementen 36 abstützen. Die Anlageabschnitte 82 und 84 weisen den größten Durchmesser des Übertragungselements 38 auf. Die Anlageabschnitte 82 und 84 bilden eine Führung für den Antriebsbogen 18 (siehe Figur 10). Der Antriebsbogen 18 verläuft zwischen den beiden Anlageabschnitten 82 und 84 bzw. zwischen den einander gegenüberliegenden Seitenflächen der Anlageabschnitte 82 und 84 (siehe Figur 10).

Der Eingriffsabschnitt 66 weist ein Antriebselement 86 und ein Halteelement 88 auf. Das Antriebselement 86 ist bezogen auf die Drehachse DUE in radialer Richtung beabstandet zu dem Halteelement 88 angeordnet. Das Antriebselement 86 ist zum Eingreifen in eine der Antriebsausnehmungen 40 des Antriebsbogens 18 ausgebildet. Das Halteelement 88 ist zum Eingreifen in eine Halteausnehmung 42 des Antriebsbogens 18 ausgebildet.

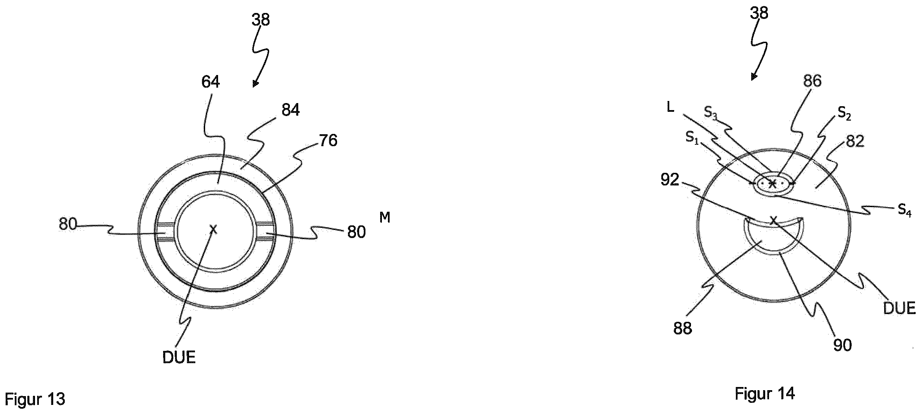

Figur 13 zeigt eine Ansicht der Stirnseite des Kopplungsabschnitts 64 des Übertragungselements 38. Der Kopplungsabschnitt 64 ist rohrförmig ausgebildet. Die Nuten 80 erstrecken sich in axialer Richtung ausgehend von der Stirnfläche des Kopplungsabschnitts 64 in den Kopplungsabschnitt 64 hinein. Der Anlageabschnitt 84 mit seinem größeren Durchmesser bildet das Ende des Kopplungsabschnitts 64. Dies gilt analog auch für den Kopplungsabschnitt 62, der in Figur 12 gezeigt ist.

Figur 14 zeigt eine Schnittansicht entlang der Schnittlinie XIV-XIV in Figur 12. Bezogen auf die Drehachse DUE ist das Antriebselement 86 in radialer Richtung beabstandet von dem Halteelement 88 angeordnet. Es liegt somit ein radialer Freiraum zwischen dem Antriebselement 86 und dem Halteelement 88 vor. Die Drehachse DUE verläuft mit einem radialen Abstand zu dem Halteelement 88. Das Antriebselement 86 ist somit anders als das Halteelement 88 exzentrisch angeordnet.

Das Antriebselement 86 ist zylinderförmig ausgebildet (siehe Figuren 12 und 14). Das Antriebselement 86 weist einen von einem Kreisquerschnitt abweichenden und zumindest abschnittsweise gekrümmten Querschnitt auf. Der Querschnitt des Antriebselements 86 ist in radialer Richtung bezogen auf seine Längsachse L verglichen mit einem Kreisquerschnitt reduziert ausgebildet. Der Querschnitt des Antriebselements 86 kann als oval, linsenförmig oder auch ellipsenförmig bezeichnet werden. Durch den in radialer Richtung reduzierten Querschnitt des Antriebselements 86 kann der Eingriff des Antriebselements 86 in eine der Antriebsausnehmungen 40 sichergestellt werden, sodass die Funktion des Antriebs der Schwenkeinheit 16 dauerhaft gewährleistet werden kann. Wie in Figur 14 gekennzeichnet ist, hat der Querschnitt des Antriebselements 86 vier Scheitelpunkte S₁, S₂, S₃ und S₄. Zwischen den Scheitelpunkten S₁ und S₂ weist das Antriebselement 86 in einer Richtung quer zur radialen Richtung, d.h. in tangentialer Richtung, seine größte Erstreckung auf. Anders ausgedrückt legt der Abstand zwischen den Scheitelpunkten S₁ und S₂ die größte Erstreckung des Antriebselements 86 fest. Die Scheitelpunkte S₃ und S₄ liegen in radialer Richtung in einer Flucht. Der Abstand zwischen den Scheitelpunkten S₃ und S₄ ist kleiner als der Abstand zwischen den Scheitelpunkten S₁ und S₂. Durch den geringeren Abstand zwischen den in radialer Richtung in einer Flucht liegenden Scheitelpunkten S₃ und S₄ wird deutlich, dass der Querschnitt des Antriebselements 86 in radialer Richtung reduziert ist. Die Längsachse L des Antriebselements 86 erstreckt sich parallel aber in radialer Richtung versetzt zu der Drehachse DUE des Übertragungselements 38.

Das Halteelement 88 hat eine Außenkontur 90 in Form eines Kreisbogens. Die dem Antriebselement 86 zugewandte Fläche 92 des Halteelements 88 ist gekrümmt. Die Fläche 92 kann konkav gekrümmt sein. Der Querschnitt des Halteelements 88 kann bei der in Figur 14 gezeigten Ausführungsform als halbmondförmig bezeichnet werden. Die Drehachse **DUE** kann sich durch den Mittelpunkt der kreisbogenförmigen Außenkontur 90 des Halteelements 88 erstrecken. Durch die konkave Krümmung der Fläche 92 erstreckt sich die Drehachse DUE nicht durch den Querschnitt des Halteelements 88 sondern an der Fläche 92 entlang.

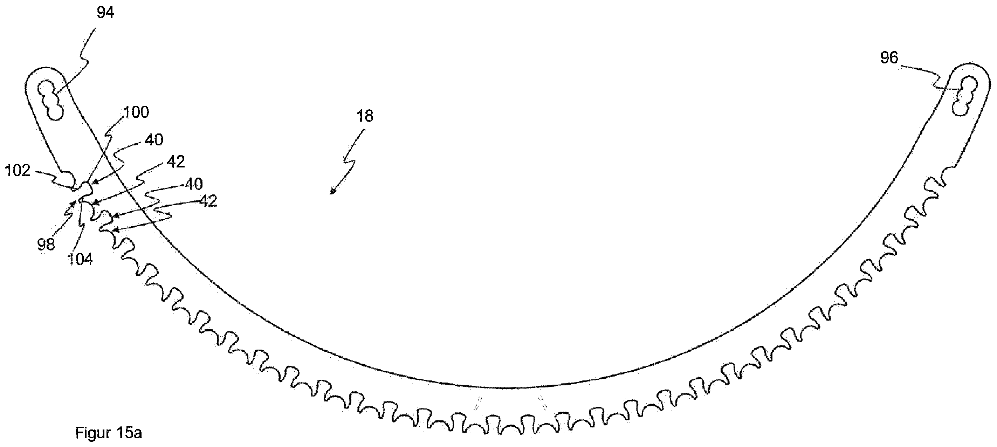

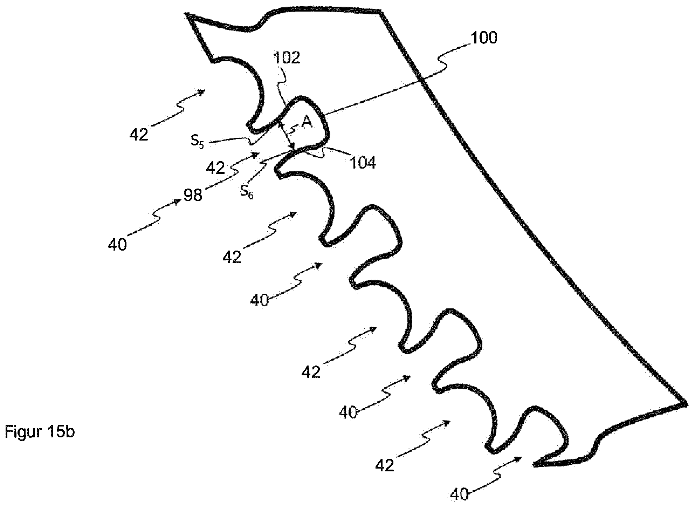

Die Figuren 15a und 15b zeigen Ansichten des Antriebsbogens 18. Der Antriebsbogen 18 weist Befestigungsöffnungen 94 und 96 auf, mit denen der Antriebsbogen 18 an dem Querträger 20 (siehe Figur 3) befestigt werden kann. Die Befestigungsöffnungen 94 und 96 sind derart ausgebildet, dass der Antriebsbogen 18 in verschiedenen Positionen an dem Querträger 20 angebracht werden kann. Die Befestigungsöffnungen 94 und 96 sind langlochförmig ausgebildet und setzen sich aus drei Teilöffnungen zusammen. Jede der Teilöffnungen gibt eine Position vor, in der der Antriebsbogen 18 an dem Querträger 20 befestigt werden kann. Durch die so gestalteten Befestigungsöffnungen 94 und 96 können Montagetoleranzen ausgeglichen werden.

Der Antriebsbogen 18 weist ferner die Antriebsausnehmungen 40 und die Halteausnehmungen 42 auf. Die Antriebsausnehmungen 40 und die Halteausnehmungen 42 sind in Umfangsrichtung des Antriebsbogens 18 abwechselnd angeordnet. Die Antriebsausnehmungen 40 und die Halteausnehmungen 42 sind am Außenumfang des Antriebsbogens 18 vorgesehen.

Figur 15b zeigt einen vergrößerten Ausschnitt aus Figur 15a. Die Antriebsausnehmungen 40 erstrecken sich in radialer Richtung weiter als die Halteausnehmung 42 in den Antriebsbogen 18 hinein. Die Antriebsausnehmungen 40 verändern ihren Querschnitt in radialer Richtung. Ausgehend von der Eintrittsöffnung 98 verengt sich der Querschnitt der Antriebsausnehmung 40 zunächst. **In** Richtung des radialen Endbereichs bzw. des Bodens 100 weitet sich der Querschnitt der Antriebsausnehmung 40 wieder auf.

Die Antriebsausnehmungen 40 weisen gegenüberliegende Wandabschnitte 102 und 104 auf. Die Wandabschnitte 102 und 104 sind gekrümmt ausgebildet. Durch die Krümmung der Wandabschnitte 102 und 104 reduziert sich der Querschnitt der Antriebsausnehmung 40 im in radialer Richtung mittleren Bereich. Dementsprechend weisen die Wandabschnitte 102 und 104 jeweils einen Scheitelpunkt S₅ und S₆ auf. Ausgehend von der Eintrittsöffnung 98 verringern die beiden gegenüberliegenden Wandabschnitte 102 und 104 der Antriebsausnehmung 40 ihren Abstand A zueinander bis zu ihrem jeweiligen Scheitelpunkt S₅ und S₆. An den Scheitelpunkten S₅ und S₆ weisen die beiden Wandabschnitte 102 und 104 den geringsten Abstand A zueinander auf. Ausgehend von dem Scheitelpunkten S₅ und S₆ vergrößert sich der Abstand A der beiden gegenüberliegenden Wandabschnitte 102 und 104 wieder in Richtung des radialen Endbereichs bzw. des Bodens 100 der Antriebsausnehmung 40. Die Antriebsausnehmungen 40 sind somit mit einem Hinterschnitt ausgebildet.

Die Krümmung der beiden gegenüberliegenden Wandabschnitte 102 und 104 stellt eine konvexe Krümmung dar.

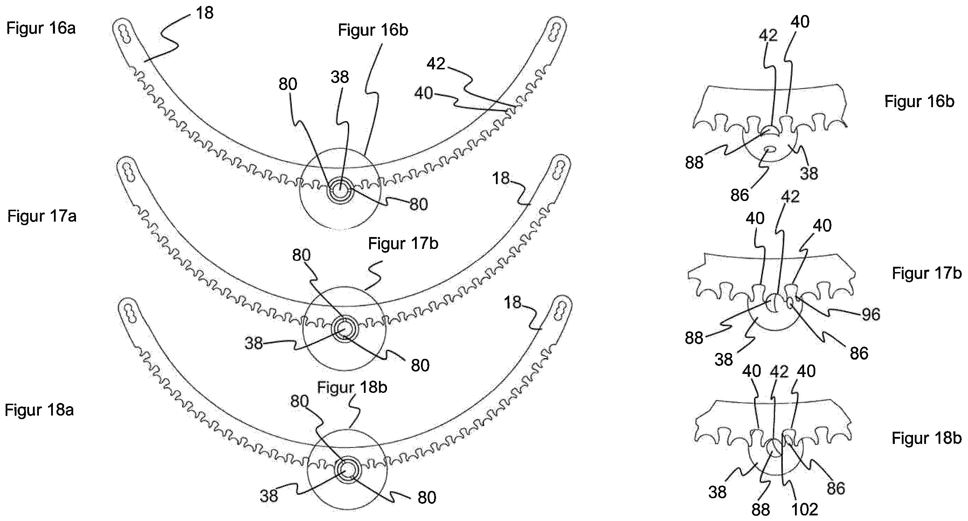

Im Folgenden wird die Funktion der Schwenkeinheit 10 der Figuren 16a bis 18b erläutert. In den Figuren 16a, 17a und 18a sind der Antriebsbogen 18 und das Übertragungselement 38 gezeigt. In jeder der drei Figuren 16a, 17a und 18a hat das Übertragungselement 38 eine andere Drehposition. In den Figuren16a, 17a und 18a wird der Antriebsbogen 18 aufgrund der Drehbewegung des Übertragungselements 38 nach "links" bewegt. Die sich verändernde Drehposition des Übertragungselements 38 ist an den unterschiedlichen Positionen der Nuten 80 erkennbar. Die Figuren 16b, 17b und 18b zeigen die in den Figuren 16a, 17a und 18a entsprechend gekennzeichneten Ausschnitte in vergrößerter Form.

Die Figuren 16a und 16b zeigen einen Zustand des Antriebsbogens 18 und des Übertragungselements 38, in dem das Halteelement 88 des Übertragungselements 38 in eine Halteausnehmung 42 des Antriebsbogens 18 eingreift. Durch den Eingriff des Halteelement 88 in die Halteausnehmung 42 wird die eingestellte Position des Antriebsbogens 18 festgestellt bzw. der Antriebsbogen 18 wird in der eingestellten Position verriegelt, d. h. in der Sperrstellung gehalten. Dadurch können die Schwenkeinheiten 16 selbst bei relativ starken äußeren Einflüssen wie starken Winden sicher in der eingestellten Schwenkstellung gehalten werden, ohne dass nennenswerte Drehmomente auf das Antriebssystem übertragen werden müssen.

In den Figuren 17a und 17b wurde das Übertragungselement 38 weiter angetrieben. Die Drehposition des Halteelements 88 in der Halteausnehmung 42 wurde verändert. Das Antriebselement 86 befindet sich an der Eintrittsöffnung 96 der in Figur 17b rechts neben der Halteausnehmung 42 ausgebildeten Antriebsausnehmung 40. In dieser Drehposition des Halteelements 88 des Übertragungselements 38 kann der Antriebsbogen 18 noch nicht bewegt werden, da das Halteelement 88 noch flächig an der Wandung der Halteausnehmung 42 anliegt.

In den Figuren 18a und 18b greift das Antriebselement 86 an einem Wandabschnitt 102 der Antriebsausnehmung 40 an und bewegt durch den Kontakt mit dem Antriebsbogen 18 den Antriebsbogen 18 weiter. Dies ist auch daran erkennbar, dass das Halteelement 88 nicht mehr flächig an der Halteausnehmung 42 anliegt, sondern nur noch an einer Stelle mit der Halteausnehmung 42 in Kontakt steht.

Die Antriebseinheit 26, die Antriebswelle 28 und das wenigstens eine Übertragungselement 38 können an einer einzigen axialen Kopplungsstelle KS1 miteinander drehmomentübertragend gekoppelt werden. Dadurch kann ein einfacher und kompakter Aufbau des Antriebs der Nachführeinrichtung 10 erreicht werden. Ferner führt die axiale Kopplungsstelle KS1 dazu, dass bei Montage- oder Wartungsarbeiten wenig Zeit zum Verbinden oder Trennen der einzelnen Komponenten benötigt wird. Darüber hinaus kann durch die Antriebsausnehmungen 40 und die Halteausnehmungen 42 an dem Antriebsbogen 18, die mit dem Übertragungselement 38 zusammenwirken, die Funktionalität des Antriebs der Nachführeinrichtung 10 dauerhaft sichergestellt werden.

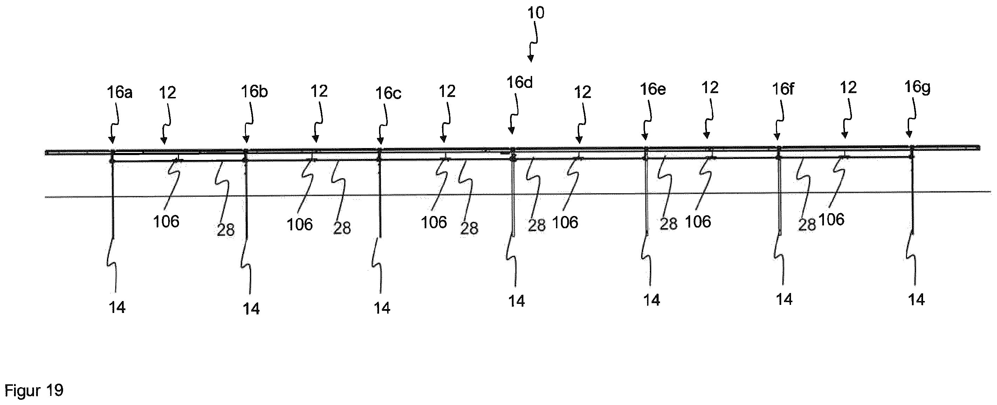

Figur 19 zeigt eine Ansicht einer Nachführeinrichtung 10. Die Nachführeinrichtung 10 weist mehrere Pfosten 14 und mehrere Schwenkeinheiten 16a bis 16g auf. Jeweils eine Schwenkeinheit 16a bis 16g ist an einem Pfosten 14 befestigt. Die Schwenkeinheiten 16a bis 16g sind über die Antriebswellen 28 miteinander drehmomentübertragend gekoppelt.

Die Nachführeinrichtung 10 weist Abhängungen 106 für die Antriebswellen 28 auf. Jeder Antriebswelle 28 ist eine Abhängung 106 zugeordnet. Die Abhängungen 106 stützen die Antriebswellen 28 ab. Dazu sind die Abhängungen 106 insbesondere in einem mittleren Bereich der Antriebswellen 28 angeordnet.

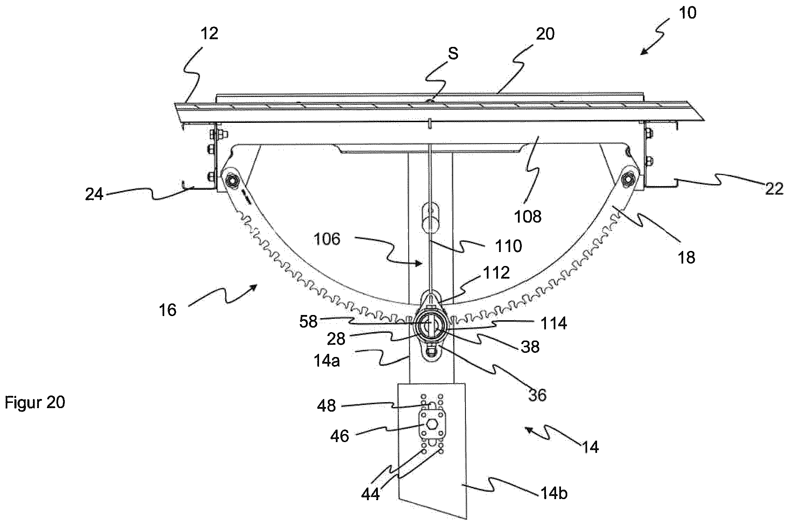

Figur 20 zeigt eine weitere Ansicht einer Nachführeinrichtung 10. In Figur 20 ist die Abhängung 106 gezeigt. Die Abhängung 106 ist an einem Querträgerelement 108 angebracht. Das Querträgerelement 108 ist mit den Tragschienen 22 und 24 verbunden. Die Abhängung 106 weist ein Verbindungselement 110 und ein Stützelement 112 auf, das die Antriebswelle 28 stützt. Das Verbindungselement 110 verbindet das Querträgerelement 108 mit dem Stützelement 112. Das Verbindungselement 110 dient somit auch zur Befestigung der Abhängung 106 an dem Querträgerelement 108. Das Stützelement 112 hat eine Aufnahmeöffnung 114, durch die sich die Antriebswelle 28 erstreckt.

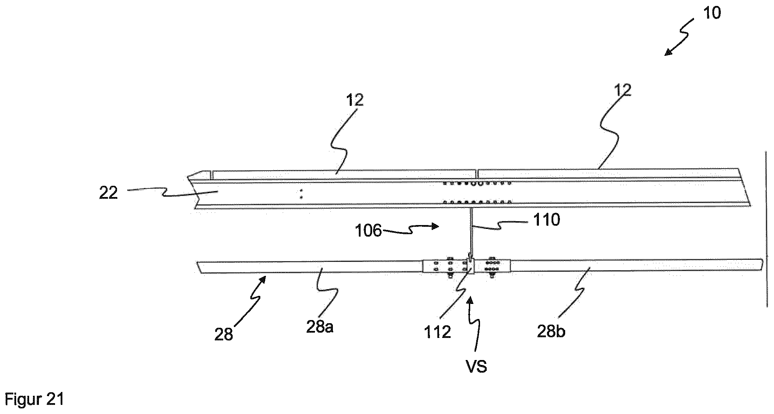

Figur 21 zeigt eine weitere Ansicht der Nachführeinrichtung 10 mit der Abhängung 106. Die Antriebswelle 28 weist Antriebswellenstücke 28a und 28b auf. Die Antriebswellenstücke 28a und 28b sind an einer Verbindungsstelle VS miteinander verbunden. An dieser Verbindungsstelle VS ist auch die Abhängung 106 angeordnet, d. h. die Abhängung 106 befindet sich wie die Verbindungsstelle VS in einem mittleren Bereich der von den Antriebswellenstücken 28a und 28b gebildeten Antriebswelle 28.

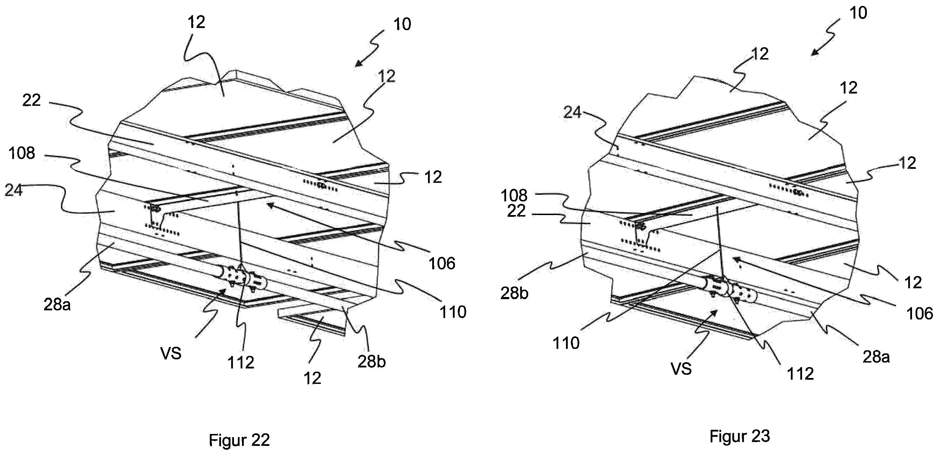

Figuren 22 und 23 zeigen perspektivische Ansichten der Nachführeinrichtung 10. Die Abhängung 106 ist an dem Querträgerelement 108 angebracht und stützt die Antriebswellenstücke 28a und 28b an der Verbindungsstelle VS ab. Die Abhängung 106 hängt von dem Querträgerelement 108 nach unten. Die Abhängung 106 weist das Verbindungselement 110 und das Stützelement 112 auf. Das Verbindungselement 110 kann eine Stange, ein Draht, ein Kabel oder ein Seil sein. Das Verbindungselement 110 erstreckt sich zwischen dem Querträgerelement 108 und dem Stützelement 112. Mit der Abhängung 106 kann verhindert werden, dass die Antriebswellenstücke 28a und 28b in ihrem mittleren Bereich bzw. an ihrer Verbindungsstelle VS "durchhängen". Dadurch können mit der Abhängung 106 auch Winkelversätze an den Kopplungsstellen KS1 und KS2 (siehe Figur 8) verhindert werden.

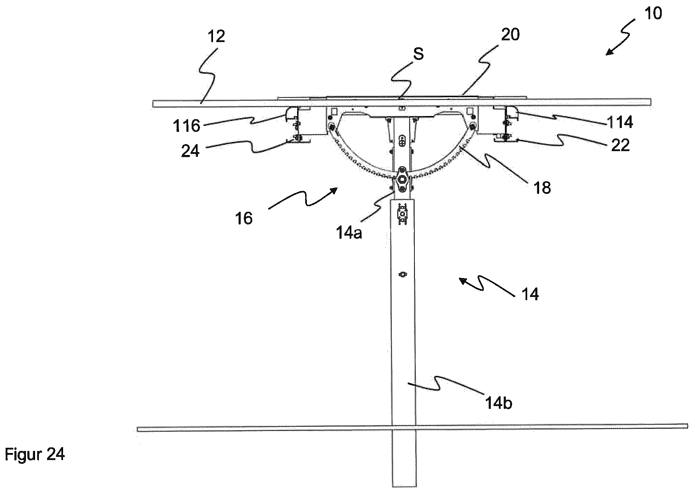

Figur 24 zeigt eine Ansicht einer Nachführeinrichtung 10, die zum Abstützen von bifazialen Solarmodulen 12 ausgebildet ist. Um bifaziale Solarmodule 12 an der Nachführeinrichtung 10 anbringen zu können und eine Verschattung der Modulrückseite durch die Tragschienen 22 und 24 zu vermeiden bzw. zu verringern, sind Adapterelemente 114 und 116 an der Nachführeinrichtung 10 vorgesehen. Die Adapterelemente 114 und 116 stützen die bifazialen Solarmodule 12 ab. Die Adapterelemente 114 und 116 sind an den Tragschienen 22 und 24 angeordnet. Die Adapterelemente 114 und 116 liegen an der Oberseite der Tragschienen 22 und 24 an. Die Tragschienen 22 und 24 sind verglichen mit den Figuren 4 bis 6 bei dieser Ausführungsform nach unten versetzt an dem Querträger 20 angeordnet.

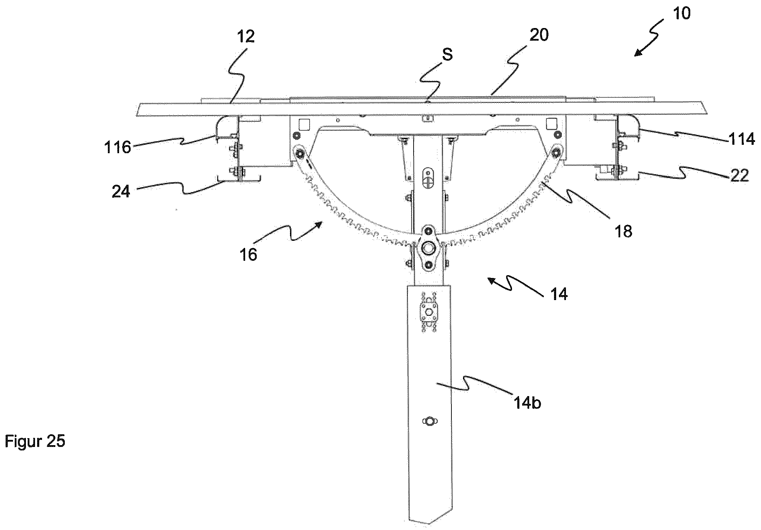

Figur 25 zeigt einen vergrößerten Ausschnitt aus Figur 24. Die Adapterelemente 114 und 116 sind als Hohlprofil ausgebildet. Die Adapterelemente 114 und 116 liegen mit ihrer Unterseite an der Oberseite der Tragschienen 22 und 24 an. Mit ihrer Oberseite stützen die Adapterelemente 114 und 116 die bifazialen Solarmodule 12 ab. Der Querträger 20 steht in vertikaler Richtung über die Oberkante des bifazialen Solarmoduls 12 vor. Dies bedeutet, dass der Querträger 20 und damit die Schwenkeinheit 16 zwischen zwei benachbarten bifazialen Solarmodulen 12 angeordnet sind. Bei einer solchen Anordnung fällt der Schwerpunkt mit der Schwenkachse bzw. mit dem zugehörigen Schwenkpunkt zusammen.

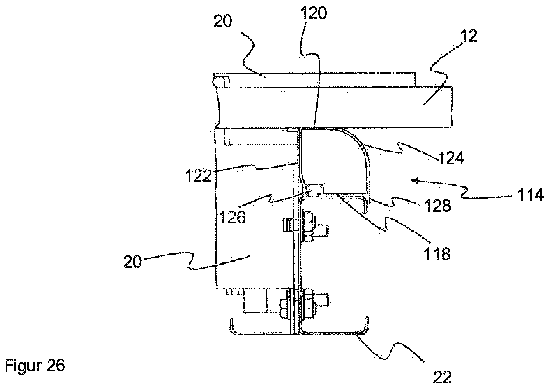

Figur 26 zeigt eine Ansicht eines vergrößerten Ausschnitts aus Figur 25, in der insbesondere das Adapterelement 114 und dessen Anbringungsposition gezeigt ist. Das Adapterelement 114 weist einen Auflageabschnitt 118 zur Auflage auf der Tragschiene 22 und einen Stützabschnitt 120 zum Abstützen der bifazialen Solarmodule 12 auf. Der Auflageabschnitt 118 und der Stützabschnitt 120 werden über zwei Verbindungsabschnitte 122 und 124 miteinander verbunden. Mit dem Auflageabschnitt 118 liegt das Adapterelement 114 an der Oberseite der Tragschiene 22 an. Der Auflageabschnitt 118 weist einen Aufnahmekanal 126 auf, der zur Aufnahme eines in Figur 26 nicht gezeigten Befestigungselements dient. Der Stützabschnitt 120 erstreckt sich im Wesentlichen parallel zu dem Auflageabschnitt 118. Ferner erstreckt sich der Stützabschnitt 122 im Wesentlichen rechtwinklig zu dem Verbindungsabschnitt 120. Der Stützabschnitt 122 und der Auflageabschnitt 118 sind über den Verbindungsabschnitt 124 miteinander verbunden, der teilweise gekrümmt verläuft. Am Übergang zwischen dem Verbindungsabschnitt 124 und dem Auflageabschnitt 118 ist ein Positioniervorsprung 128 ausgebildet, der zur Positionierung des Adapterelements 114 an der Tragschiene 22 dient. Die Adapterelemente 114 und 116 bilden Abstandshalter, um bei den bifazialen Solarmodulen 12 die Rückseitenverschattung zu minimieren.

## Patentansprüche

1. Nachführeinrichtung (10) für Solarmodule,
umfassend:
wenigstens eine Schwenkeinheit (16), wobei die wenigstens eine Schwenkeinheit (16) wenigstens einen Antriebsbogen (18) und wenigstens einen um eine Schwenkachse (S) verschwenkbaren Querträger (20) aufweist, der mit dem wenigstens einen Antriebsbogen (18) verbunden ist, wobei der wenigstens eine Antriebsbogen (18) in Umfangsrichtung abwechselnd angeordnete Antriebsausnehmungen (40) und Halteausnehmungen (42) aufweist,
wenigstens einen Pfosten (14), an dem der wenigstens eine Querträger (20) um die Schwenkachse (S) schwenkbar gelagert ist,
wenigstens ein um eine Drehachse drehbares Übertragungselement (38), wobei das wenigstens eine Übertragungselement (38) wenigstens ein Antriebselement (86) zum Eingreifen in eine der Antriebsausnehmungen (40) und wenigstens ein Halteelement (88) zum Eingreifen in eine der Halteausnehmungen (42) aufweist,
wenigstens eine Antriebswelle (28), die mit dem wenigstens einen Übertragungselement (38) gekoppelt ist, und
wenigstens eine Antriebseinheit (26), die an dem wenigstens einen Pfosten (14) angebracht ist, wobei die wenigstens eine Antriebseinheit (26) wenigstens einen Motor (30) und wenigstens ein Ausgangselement (54) aufweist, **dadurch gekennzeichnet, dass** das wenigstens eine Ausgangselement (54),
die wenigstens eine Antriebswelle (28) und das wenigstens eine Übertragungselement (38) an einer gemeinsamen axialen Kopplungsstelle (KS1) drehmomentübertragend miteinander gekoppelt sind.

2. Nachführeinrichtung (10) nach Anspruch 1,
wobei sich die wenigstens eine Antriebswelle (28) durch die wenigstens eine Antriebseinheit (26) erstreckt und/oder wobei die wenigstens eine Antriebseinheit (26) wenigstens ein Getriebe (32) aufweist, wobei sich die wenigstens eine Antriebswelle (28) durch das wenigstens eine Getriebe (32) erstreckt.

3. Nachführeinrichtung (10) nach Anspruch 1 oder 2,
wobei zur drehmomentübertragenden Kopplung zwischen dem wenigstens einen Ausgangselement (54), der wenigstens einen Antriebswelle (28) und dem wenigstens eine Übertragungselement (38) wenigstens ein Kopplungselement (56) an der axialen Kopplungsstelle (KS1) vorgesehen ist.

4. Nachführeinrichtung (10) nach einem der Ansprüche 1 bis 3,
wobei an der axialen Kopplungsstelle (KS1) wenigstens ein elastisches Element (70) zum Winkelausgleich angeordnet ist.

5. Nachführeinrichtung (10) nach Anspruch 4,
wobei das wenigstens eine elastische Element (70) in radialer Richtung zwischen dem wenigstens einen Übertragungselement (38) und der wenigstens einen Antriebswelle (28) angeordnet ist.

6. Nachführeinrichtung (10) nach einem der Ansprüche 1 bis 5,
wobei der wenigstens eine Motor (30) eine Drehachse (DE) aufweist, die sich zumindest im Wesentlichen parallel oder abgewinkelt zur Drehachse (DA) der wenigstens einen Antriebswelle (28) erstreckt, und/oder
wobei sich die Drehachse (DE) des Motors (30) zumindest im Wesentlichen parallel oder abgewinkelt zur Schwenkachse (S) erstreckt.

7. Nachführeinrichtung (10) nach einem der Ansprüche 1 bis 6,
wobei die Antriebsausnehmungen (40) in einem in radialer Richtung mittleren Bereich einen reduzierten Querschnitt aufweisen und/oder wobei die Antriebsausnehmungen (40) gegenüberliegende Wandabschnitte (102, 104) aufweisen, die gekrümmt sind.

8. Nachführeinrichtung (10) nach der Ansprüche 1 bis 7,
wobei die Antriebsausnehmungen (40) im Bereich der Eintrittsöffnung (98) und in einem radialen Endbereich verglichen mit dem mittleren Bereich einen größeren Querschnitt aufweisen und/oder wobei das Übertragungselement (38) zwei Kopplungsabschnitte (62, 64) aufweist, von denen jeder zur Kopplung mit zumindest einem Antriebswellenstück (28a, 28b) ausgebildet ist.

9. Nachführeinrichtung (10) nach einem der Ansprüche 1 bis 8,
wobei das wenigstens eine Halteelement (88) eine gekrümmte Fläche (92) aufweist, die dem wenigstens einen Antriebselement (86) zugewandt ist und/oder wobei der Pfosten (14) einen Befestigungsabschnitt (14a) und einen Verankerungsabschnitt (14b) aufweist, wobei an dem Befestigungsabschnitt (14a) die Schwenkeinheit (16) und die Antriebseinheit (26) angeordnet sind.

10. Nachführeinrichtung (10) nach Anspruch 9,
wobei der Befestigungsabschnitt (14a) und der Verankerungsabschnitt (14b) als separate Pfostenteile ausgeführt sind, die miteinander verbindbar sind.

11. Nachführeinrichtung (10) nach einem der Ansprüche 1 bis 10,
wobei sich die Antriebswelle (28) aus mehreren Antriebswellenstücken (28a, 28b) zusammensetzt, die über wenigstens ein Übertragungselement (38) drehmomentübertragend koppelbar sind und/oder wobei die wenigstens eine Antriebseinheit (26) über wenigstens ein Halterungselement (52) seitlich an dem wenigstens einen Pfosten (14) angebracht ist.

12. Nachführeinrichtung (10) nach einem der Ansprüche 1 bis 11,
wobei die Nachführeinrichtung (10) wenigstens eine Abhängung (106) zum Abstützen der wenigstens einen Antriebswelle (28) aufweist.

13. Nachführeinrichtung (10) nach Anspruch 12,
wobei die wenigstens eine Abhängung (106) wenigstens ein Verbindungselement (110) und ein Stützelement (112) aufweist, wobei das Verbindungselement (110) an einem Trägerelement (108) angebracht ist und sich zu dem wenigstens einen Stützelement (112) erstreckt, dass die wenigstens eine Antriebswelle (28) zur Abstützung kontaktiert.

14. Nachführeinrichtung (10) nach einem der Ansprüche 1 bis 13,
wobei die Nachführeinrichtung (10) wenigstens ein Adapterelement (114,116) zum Anbringen von bifazialen Solarmodulen (12) aufweist.

15. Nachführeinrichtung (10) nach Anspruch 14,
wobei das wenigstens eine Adapterelement (114, 116) auf der Oberseite wenigstens einer Tragschiene (22, 24) auffliegt und einen Stützabschnitt (120) für die bifazialen Solarmodule (12) aufweist.

## Claims

1. Tracking device (10) for solar modules
comprising:
at least one pivoting unit (16), wherein the at least one pivoting unit (16) has at least one drive arch (18) and at least one cross member (20) pivotable about a pivot axis (S), the at least one cross member (20) being connected to the at least one drive arch (18), wherein the at least one drive arch (18) has circumferentially alternating disposed drive recesses (40) and retaining recesses (42),
at least one post (14), at which the at least one cross member (20) is pivotably mounted about a pivot axis (S),
at least one transmission member (38) that is rotated about a rotational axis, wherein the at least one transmission member (38) has at least one drive element (86) that engages into one of the drive recesses (40) and at least one holding member (88) that engages into one of the retaining recesses (42),
at least one drive shaft (28) that is coupled with the at least one transmission member (38) and
at least one drive unit (26) that is attached to the at least one post (14), wherein the at least one drive unit (26) has at least one motor (30) and at least one output member (54),
**characterized in that** the at least one output member (54), the at least one drive shaft (28) and the at least one transmission member (38) are coupled to one another at a joint axial coupling point (KS1) in a torque-transmitting manner.

2. Tracking device (10) of claim 1,
wherein the at least one drive shaft (28) extends through the at least one drive unit (26) and/or wherein the at least one drive unit (26) has at least one gearbox (32), wherein the at least one drive shaft (28) extends through the at least one gearbox (32).

3. Tracking device (10) of claim 1 or 2,
wherein at least one coupling member (56) is provided at the axial coupling point (KS1) for providing coupling in a torque-transmitting manner between the at least one output member (54), the at least one drive shaft (28) and the at least one transmission member (38).

4. Tracking device (10) of any one of claims 1 to 3,
wherein at least one elastic element (70) is disposed at the axial coupling point (KS1) to compensate the angle.

5. Tracking device (10) of claim 4,
wherein the at least one elastic member (70) is disposed in a radial direction between the at least one transmission member (38) and the at least one drive shaft (28).

6. Tracking device (10) of any one of claims 1 to 5,
wherein the at least one motor (30) has a rotational axis (DE), which at least essentially extends in parallel or angled to the rotational axis (DA) of the at least one drive shaft (28) and/or
wherein the rotational axis (DE) of the motor (30) extends at least essentially parallel or angled to the pivot axis (S).

7. Tracking device (10) of any one of claims 1 to 6,
wherein the drive recesses (40) have a reduced cross section in the central area in a radial direction and/or wherein the drive recesses (40) have opposing wall portions (102, 104) that are curved.

8. Tracking device (10) of any one of claims 1 to 7,
wherein the drive recesses (40) in the area of the entry opening (98) and in the radial end area have a larger cross section compared to the central area and/or wherein the transmission member (38) has two coupling portions (62, 64), wherein each of them is configured with at least one drive shaft piece (28a, 28b) for coupling.

9. Tracking device (10) of any one of claims 1 to 8,
wherein the at least one holding member (88) has a curved surface (92) facing the at least one drive member (86) and/or wherein the post (14) has a fastening portion (14a) and an anchoring portion (14b), wherein the pivoting unit (16) and the drive unit (26) are disposed at the fastening portion (14a).

10. Tracking device (10) of claim 9,
wherein the fastening portion (14a) and the anchoring portion (14b) are configured as two separate post pieces that are connectable with each other.

11. Tracking device (10) of any one of claims 1 to 10,
wherein the drive shaft (28) consists of several drive shaft pieces (28a, 28b) that may be coupled in a torque-transmitting manner via at least one transmission member (38) and/or wherein the at least one drive unit (26) is attached laterally to the at least one post (14) via at least one mounting member (52).

12. Tracking device (10) of any one of claims 1 to 11,
wherein the tracking device (10) has at least one suspension (106) that supports the at least one drive shaft (28).

13. Tracking device (10) of claim 12,
wherein the at least one suspension (106) has at least one connecting member (110) and one support member (112), wherein the connecting member (110) is attached to a carrier member (108) and extends towards the at least one support member (112) that contacts the at least one drive shaft (28) for support.

14. Tracking device (10) of any one of claims 1 to 13,
wherein the tracking device (10) has at least one adapter element (114, 116) for attaching the bifacial solar modules (12).

15. Tracking device (10) of claim 14,
wherein the at least one adapter element (114, 116) rests on the top side of at least one support rail (22, 24) and has a support portion (120) for the bifacial solar modules (12).

## Revendications

1. Dispositif de suivi (10) pour modules solaires, comportant :
au moins une unité de pivotement (16), ladite au moins une unité de pivotement (16) comprenant au moins un arceau d'entraînement (18) et au moins une traverse (20) pouvant pivoter autour d'un axe de pivotement (S), qui est reliée audit au moins un arceau d'entraînement (18), ledit au moins un arceau d'entraînement (18) comprenant des évidements d'entraînement (40) et des évidements de maintien (42) disposés en alternance dans la direction circonférentielle,
au moins un poteau (14) sur lequel ladite au moins une traverse (20) est montée de manière à pouvoir pivoter autour de l'axe de pivotement (S),
au moins un élément de transmission (38) pouvant tourner autour d'un axe de rotation (38), ledit au moins un élément de transmission (38) comprenant au moins un élément d'entraînement (86) destiné à s'engager dans l'un des évidements d'entraînement (40) et au moins un élément de maintien (88) destiné à s'engager dans l'un des évidements de maintien (42),
au moins un arbre d'entraînement (28) qui est accouplé audit au moins un élément de transmission (38), et
au moins une unité d'entraînement (26) qui est montée sur ledit au moins un poteau (14), ladite au moins une unité d'entraînement (26) comprenant au moins un moteur (30) et au moins un élément de sortie (54),
**caractérisé en ce que**
ledit au moins un élément de sortie (54), ledit au moins un arbre d'entraînement (28) et ledit au moins un élément de transmission (38) sont accouplés entre eux de manière à pouvoir transmettre un couple à un point d'accouplement axial commun (KS1).

2. Dispositif de suivi (10) selon la revendication 1,
dans lequel ledit au moins un arbre d'entraînement (28) s'étend à travers ladite au moins une unité d'entraînement (26) et/ou dans lequel ladite au moins une unité d'entraînement (26) comprend au moins un engrenage (32), ledit au moins un arbre d'entraînement (28) s'étendant à travers ledit au moins un engrenage (32).

3. Dispositif de suivi (10) selon la revendication 1 ou 2,
dans lequel au moins un élément d'accouplement (56) est prévu au niveau du point d'accouplement axial (KS1) pour assurer l'accouplement de transmission de couple entre ledit au moins un élément de sortie (54), ledit au moins un arbre d'entraînement (28) et ledit au moins un élément de transmission (38).

4. Dispositif de suivi (10) selon l'une quelconque des revendications 1 à 3,
dans lequel au moins un élément élastique (70) est disposé au point d'accouplement axial (KS1) pour la compensation angulaire.

5. Dispositif de suivi (10) selon la revendication 4,
dans lequel ledit au moins un élément élastique (70) est disposé dans la direction radiale entre ledit au moins un élément de transmission (38) et ledit au moins un arbre d'entraînement (28).

6. Dispositif de suivi (10) selon l'une quelconque des revendications 1 à 5,
dans lequel ledit au moins un moteur (30) comprend un axe de rotation (DE) qui s'étend au moins sensiblement parallèlement ou en formant un angle par rapport à l'axe de rotation (DA) dudit au moins un arbre d'entraînement (28), et/ou dans lequel l'axe de rotation (DE) du moteur (30) s'étend au moins sensiblement parallèlement ou en formant un angle par rapport à l'axe de pivotement (S).

7. Dispositif de suivi (10) selon l'une quelconque des revendications 1 à 6,
dans lequel les évidements d'entraînement (40) présentent une coupe transversale réduite dans une zone centrale dans la direction radiale et/ou dans lequel les évidements d'entraînement (40) comprennent des sections de paroi se faisant face (102, 104) qui sont incurvées.

8. Dispositif de suivi (10) selon l'une quelconque des revendications 1 à 7,
dans lequel les évidements d'entraînement (40) présentent une coupe transversale plus grande dans la zone de l'ouverture d'entrée (98) et dans une zone d'extrémité radiale par rapport à la zone centrale et/ou dans lequel l'élément de transmission (38) comprend deux sections d'accouplement (62, 64) dont chacune est conçue pour être accouplée à au moins une pièce d'arbre d'entraînement (28a, 28b).

9. Dispositif de suivi (10) selon l'une quelconque des revendications 1 à 8,
dans lequel ledit au moins un élément de maintien (88) présente une surface incurvée (92) qui est tournée vers ledit au moins un élément d'entraînement (86) et/ou dans lequel le poteau (14) comprend une section de fixation (14a) et une section d'ancrage (14b), l'unité de pivotement (16) et l'unité d'entraînement (26) étant disposées sur la section de fixation (14a).

10. Dispositif de suivi (10) selon la revendication 9,
dans lequel la section de fixation (14a) et la section d'ancrage (14b) sont réalisées sous la forme de parties de poteau séparées qui peuvent être reliées entre elles.

11. Dispositif de suivi (10) selon l'une quelconque des revendications 1 à 10,
dans lequel l'arbre d'entraînement (28) est composé de plusieurs pièces d'arbre d'entraînement (28a, 28b) qui peuvent être accouplées de manière à pouvoir transmettre un couple par au moins un élément de transmission (38) et/ou dans lequel ladite au moins une unité d'entraînement (26) est montée latéralement sur ledit au moins un poteau (14) par au moins un élément de fixation (52).

12. Dispositif de suivi (10) selon l'une quelconque des revendications 1 à 11,
dans lequel le dispositif de suivi (10) comprend au moins un moyen de suspension (106) pour soutenir ledit au moins un arbre d'entraînement (28).

13. Dispositif de suivi (10) selon la revendication 12,
dans lequel ledit au moins un moyen de suspension (106) comprend au moins un élément de liaison (110) et un élément d'appui (112), l'élément de liaison (110) étant monté sur un élément de support (108) et s'étendant vers ledit au moins un élément d'appui (112) qui est en contact avec ledit au moins un arbre d'entraînement (28) pour son soutien.

14. Dispositif de suivi (10) selon l'une quelconque des revendications 1 à 13,
dans lequel le dispositif de suivi (10) comprend au moins un élément adaptateur (114, 116) pour l'installation de modules solaires bifaciaux (12).

15. Dispositif de suivi (10) selon la revendication 14,
dans lequel ledit au moins un élément adaptateur (114, 116) repose sur la face supérieure d'au moins un rail de support (22, 24) et comprend une section d'appui (120) pour les modules solaires bifaciaux (12).
